# EUROPEAN PATENT APPLICATION

(11) **EP 4 661 547 A1**
(43) Date of publication of application: **10.12.2025**
(21) Application number: 23919123.2
(22) Date of filing: 03.02.2023
(51) Int. Cl.: H04W 72/12

(54) **DOWNLINK CONTROL INFORMATION SIZE ALIGNMENT AND DETERMINATION METHOD AND APPARATUS**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2023/074482
(87) International publication number: WO 2024/159549

(57) **Abstract**

The present invention relates to the technical field of communications, and in particular to a downlink control information size alignment and determination method and apparatus. The downlink control information size alignment method comprises: receiving first downlink control information used to schedule multiple cells; determining size alignment of traditional downlink control information in each cell scheduled by the first downlink control information, a total size of the first downlink control information and the size of aligned traditional downlink control information being less than or equal to a first threshold in at least one first cell corresponding to the first downlink control information. According to the present disclosure, it is ensured that the total of DCI sizes in at least one first cell is not too large, thereby avoiding excessive complexity of blind detection of DCI by a terminal. In addition, the problem of MC-DCIs to be sent on different cells having different sizes when a network device schedules multiple cells by means of one MC-DCI is avoided.

## Description

### FIELD

The present disclosure relates to the field of communication technologies, and in particular to a method for determining a downlink control information size alignment, a method for performing a downlink control information size alignment, an apparatus for determining a downlink control information size alignment, an apparatus for performing a downlink control information size alignment, a system for a downlink control information size alignment, a communication device and a computer-readable storage medium.

### BACKGROUND

In related technologies, a single piece of downlink control information (DCI) in a scheduling cell is only allowed to schedule data of one cell, such as scheduling a physical uplink shared channel (PUSCH) and a physical downlink shared channel (PDSCH). However, with the increasing fragmentation of frequency resources, the demand for scheduling data across multiple cells simultaneously will gradually increase.

### SUMMARY

Embodiments of the present disclosure provide a method for determining a downlink control information size alignment, a method for performing a downlink control information size alignment, an apparatus for determining a downlink control information size alignment, an apparatus for performing a downlink control information size alignment, a system for a downlink control information size alignment, a communication device and a computer-readable storage medium, to solve a technical problem in related technologies.

According to a first aspect of the embodiments of the present disclosure, a method for determining a downlink control information size alignment is provided. The method is executed by a terminal, and includes: receiving first downlink control information for scheduling a plurality of cells; and determining a size alignment on pieces of legacy downlink control information in each cell scheduled by the first downlink control information, where in at least one first cell corresponding to the first downlink control information, a total number of a size of the first downlink control information and one or more sizes of the pieces of legacy downlink control information aligned is less than or equal to a first threshold.

According to a second aspect of the embodiments of the present disclosure, a method for determining a downlink control information size alignment is provided. The method is executed by a terminal, and includes: receiving first downlink control information for scheduling a plurality of cells; determining a reference cell among at least one first cell corresponding to the first downlink control information; and determining a size alignment on pieces of legacy downlink control information and the first downlink control information in the reference cell, and determining a size alignment on pieces of legacy downlink control information in a second cell among the at least one first cell, where the second cell is a cell other than the reference cell among the at least one first cell.

According to a third aspect of the embodiments of the present disclosure, a method for performing a downlink control information size alignment is provided. The method is executed by a network device, and includes: performing a size alignment on pieces of legacy downlink control information in each cell scheduled by first downlink control information for scheduling a plurality of cells, where in at least one first cell corresponding to the first downlink control information, a total number of a size of the first downlink control information and one or more sizes of the pieces of legacy downlink control information aligned is less than or equal to a first threshold; and transmitting the first downlink control information to a terminal.

According to a fourth aspect of the embodiments of the present disclosure, a method for performing a downlink control information size alignment is provided. The method is executed by a network device, and includes: determining a reference cell among at least one first cell corresponding to first downlink control information for scheduling a plurality of cells; performing a size alignment on pieces of legacy downlink control information and the first downlink control information in the reference cell, and performing a size alignment on pieces of legacy downlink control information in a second cell among the at least one first cell, where the second cell is a cell other than the reference cell among the at least one first cell; and transmitting the first downlink control information to a terminal.

According to a fifth aspect of the embodiments of the present disclosure, an apparatus for determining a downlink control information size alignment is provided. The apparatus includes: a receiving module, configured to receive first downlink control information for scheduling a plurality of cells; and a processing module, configured to determine a size alignment on pieces of legacy downlink control information in each cell scheduled by the first downlink control information, where in at least one first cell corresponding to the first downlink control information, a total number of a size of the first downlink control information and one or more sizes of the pieces of legacy downlink control information aligned is less than or equal to a first threshold.

According to a sixth aspect of the embodiments of the present disclosure, an apparatus for determining a downlink control information size alignment is provided. The apparatus includes: a receiving module, configured to receive first downlink control information for scheduling a plurality of cells; and a processing module, configured to determine a reference cell among at least one first cell corresponding to the first downlink control information, determine a size alignment on pieces of legacy downlink control information and the first downlink control information in the reference cell, and determine a size alignment on pieces of legacy downlink control information in a second cell among the at least one first cell, where the second cell is a cell other than the reference cell among the at least one first cell.

According to a seventh aspect of the embodiments of the present disclosure, an apparatus for performing a downlink control information size alignment is provided. The apparatus includes: a processing module, configured to perform a size alignment on pieces of legacy downlink control information in each cell scheduled by first downlink control information for scheduling a plurality of cells, where in at least one first cell corresponding to the first downlink control information, a total number of a size of the first downlink control information and one or more sizes of the pieces of legacy downlink control information aligned is less than or equal to a first threshold; and a transmitting module, configured to transmit the first downlink control information to a terminal.

According to an eighth aspect of the embodiments of the present disclosure, an apparatus for performing a downlink control information size alignment is provided. The apparatus includes: a processing module, configured to determine a reference cell among at least one first cell corresponding to first downlink control information for scheduling a plurality of cells, perform a size alignment on pieces of legacy downlink control information and the first downlink control information in the reference cell, and perform a size alignment on pieces of legacy downlink control information in a second cell among the at least one first cell, where the second cell is a cell other than the reference cell among the at least one first cell; and a transmitting module, configured to transmit the first downlink control information to a terminal.

According to a ninth aspect of the embodiments of the present disclosure, a system for a downlink control information size alignment is provided, including a terminal and a network device. The terminal is configured to implement the method for determining the downlink control information size alignment mentioned above, and the network device is configured to implement the method for performing the downlink control information size alignment mentioned above.

According to a tenth aspect of the embodiments of the present disclosure, a communication device is provided, including: a processor; and a memory for storing a computer program. When the computer program is executed by the processor, the above method for determining the downlink control information size alignment is implemented.

According to an eleventh aspect of the embodiments of the present disclosure, a communication device is provided, including: a processor; and a memory configured to store a computer program. The computer program, when executed by the processor, causes the above method for performing the downlink control information size alignment to be implemented.

According to a twelfth aspect of the embodiments of the present disclosure, a computer-readable storage medium is provided, configured to store a computer program. The computer program, when executed by a processor, causes the above method for determining the downlink control information size alignment to be implemented.

According to a thirteenth aspect of the embodiments of the present disclosure, a computer-readable storage medium is provided, configured to store a computer program. The computer program, when executed by a processor, causes the above method for performing the downlink control information size alignment to be implemented.

According to an embodiment of the present disclosure, the terminal may receive the MC-DCI for scheduling multiple cells, may determine the multiple cells scheduled by the MC-DCI, and may determine the size alignment of legacy DCIs in each of the multiple cells. Since for each cell, the size alignment is performed on only the legacy DCIs in the cell, but not on the MC-DCI, this helps to simplify the process of alignment deducing by the terminal. Furthermore, the sum of the number of the size of the MC-DCI and the number of the one or more sizes of the aligned legacy DCIs in multiple cells is less than or equal to a product of the number of the at least one first cell corresponding to the MC-DCI and a first number, which is helpful to ensure that the total number of sizes of DCIs in the at least one first cell will not be too large, thereby avoiding excessive complexity of DCI blind detection by the terminal.

Moreover, since only the sizes of the legacy DCIs are aligned in each cell and the MC-DCI does not participate in the alignment, the size of the MC-DCI remains unchanged across different cells, thereby avoiding a problem of the MC-DCI to be transmitted in different cells having different sizes when the above network device schedules multiple cells with one MC-DCI.

### BRIEF DESCRIPTION OF THE DRAWINGS

In order to more clearly illustrate technical solutions in embodiments of the present disclosure, drawings required in the description of the embodiments will be briefly introduced below. Obviously, the drawings in the following description are only some embodiments of the present disclosure. For those ordinary skills in the art, other drawings may be obtained based on these drawings without creative effort.
FIG. 1 is a schematic diagram showing an application scenario according to an embodiment of the present disclosure.
FIG. 2 is a schematic flowchart of a method for determining a downlink control information size alignment according to an embodiment of the present disclosure.
FIG. 3 is a schematic diagram showing another application scenario according to an embodiment of the present disclosure.
FIG. 4 is a schematic flowchart of a method for determining a downlink control information size alignment according to an embodiment of the present disclosure.
FIG. 5 is a schematic diagram showing another application scenario according to an embodiment of the present disclosure.
FIG. 6 is a schematic flowchart of a method for performing a downlink control information size alignment according to an embodiment of the present disclosure.
FIG. 7 is a schematic flowchart of a method for performing a downlink control information size alignment according to an embodiment of the present disclosure.
FIG. 8 is a schematic diagram showing interaction between a terminal and a network device according to an embodiment of the present disclosure.
FIG. 9 is a schematic diagram showing another interaction between a terminal and a network device according to an embodiment of the present disclosure.
FIG. 10 is a schematic block diagram of an apparatus for determining a downlink control information size alignment according to an embodiment of the present disclosure.
FIG. 11 is a schematic block diagram of an apparatus for determining a downlink control information size alignment according to an embodiment of the present disclosure.
FIG. 12 is a schematic block diagram of an apparatus for performing a downlink control information size alignment according to an embodiment of the present disclosure.
FIG. 13 is a schematic block diagram of an apparatus for performing a downlink control information size alignment according to an embodiment of the present disclosure.
FIG. 14 is a schematic block diagram of an apparatus for performing downlink control information size alignment according to an embodiment of the present disclosure.
FIG. 15 is a schematic block diagram of an apparatus for determining a downlink control information size alignment according to an embodiment of the present disclosure.

### DETAILED DESCRIPTION

In the following, technical solutions in embodiments of the present disclosure will be described in a clear and thorough manner with reference to the drawings in the embodiments of the present disclosure. Apparently, the described embodiments are merely a part of, rather than all of, the embodiments of the present disclosure. Based on the embodiments of the present disclosure, a person skilled in the art may, without creative effort, obtain other embodiments, all of which shall fall within the scope of the present disclosure.

Terms used in the embodiments of the present application are only for the purpose of describing specific embodiments, and shall not be construed to limit the present application. As used in the embodiments of the present application and the appended claims, "a/an" and "the" in a singular form are intended to include plural forms, unless clearly indicated in the context otherwise. It should be understood that the term "and/or" used herein represents and contains any one of associated listed items and all possible combinations of more than one associated listed items.

It should be understood that terms such as "first", "second" and "third" may be used in the embodiments of the present application for describing various information, these information should not be limited by these terms. These terms are only used for distinguishing information of the same type from others. For example, first information may also be referred to as second information, and similarly, the second information may also be referred to as the first information, without departing from the scope of the embodiments of the present application. As used herein, the term "if" may be construed to mean "when" or "upon" or "in response to determining" depending on the context.

For the purpose of brevity and ease of understanding, terms used herein to characterize size relationships are "greater than" or "less than", "higher than" or "lower than". Those skilled in the art may understand that the term "greater than" also covers the meaning of "greater than or equal to", and the term "less than" also covers the meaning of "less than or equal to"; the term "higher than" covers the meaning of "higher than or equal to", and the term "lower than" also covers the meaning of "lower than or equal to".

The embodiments of the present disclosure propose downlink control information for scheduling multiple cells, which may also be referred to as multi-carrier scheduling downlink control information, for example, may be referred to as multi-cell scheduling DCI, and may be abbreviated as MC-DCI. For the convenience of examples below, downlink control information for scheduling multiple cells is represented by the MC-DCI.

The MC-DCI may be used to schedule multiple cells, and specifically refers to scheduling data of multiple cells, such as scheduling a PUSCH, a PDSCH, etc., of one or more cells among the multiple cells, thereby achieving scheduling of multiple cells with one DCI.

In an embodiment, the MC-DCI may include an MC-DCI for scheduling uplink transmissions of multiple cells, for example, a format may be represented by DCI format 0_X, and the MC-DCI may also include an MC-DCI for scheduling downlink transmissions of multiple cells, for example, a format may be represented by DCI format 1_X, where X may be 3, for example.

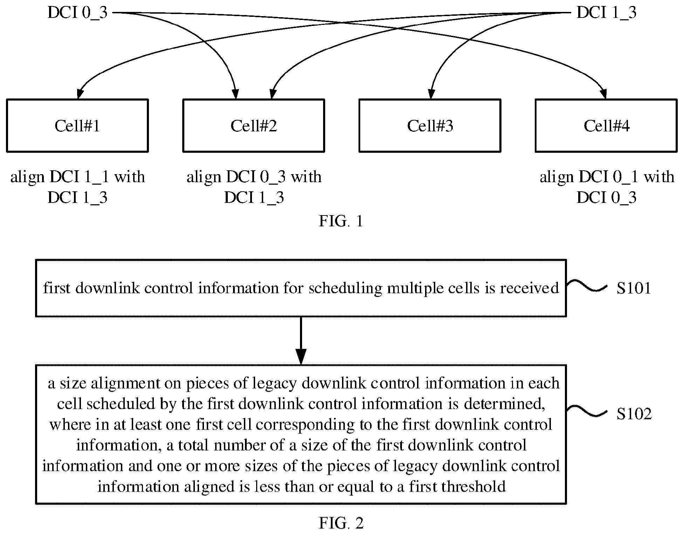

FIG. 1 is a schematic diagram showing an application scenario according to an embodiment of the present disclosure.

As shown in FIG. 1, by taking an MC-DCI scheduling four cells as an example, the four cells are Cell#1, Cell#2, Cell#3, and Cell#4.

The MC-DCI includes an MC-DCI for scheduling uplink transmissions of multiple cells, such as DCI 0_3, and an MC-DCI for scheduling downlink transmissions of multiple cells, such as DCI 1_3. DCI 0_3 is used to schedule uplink transmissions of Cell#2 and Cell#4, and DCI 1_3 is used to schedule downlink transmissions of Cell#1, Cell#2 and Cell#3.

The introduction of the MC-DCI based on a legacy DCI in this embodiment may result in an increase in the number of DCI sizes, where the size refers to the number of bits occupied, and the DCI size may be referred to as the size of DCI or the dimension of DCI.

A large number of DCI sizes may increase the complexity of DCI blind detection by a terminal. In this regard, a network device may align DCI sizes to be sent, thereby reducing the number of DCI sizes, and causing the number of DCI sizes to satisfy a DCI size budget.

The alignment process includes at least one of: performing alignment on a legacy DCI, performing alignment on an MC-DCI and a legacy DCI, or performing alignment on an MC-DCI for scheduling uplink transmissions of multiple cells and MC-DCI for scheduling downlink transmissions of multiple cells.

It should be noted that in the embodiments of the present disclosure, after the network device performing a size alignment on DCIs, the number of sizes of the DCIs may meet a preset condition, and the preset condition may be a "k+1" condition. That is, in one cell, the number of sizes of DCIs scrambled by a C-RNTI (cell radio network temporary identifier) is less than or equal to k, and the number of sizes of DCIs scrambled by an RNTI other than the C-RNTI is less than or equal to 1. Alternatively, the "k+1" condition may also be expressed as, in one cell, the number of sizes of DCIs is less than or equal to k+1, where the number of sizes of DCIs scrambled by a C-RNTI is less than or equal to k.

In an embodiment, a value of k may be set as needed, for example, it may be 3 or 4.

In the scenario shown in FIG. 1, the DCI 0_3 and DCI 1_3 transmitted by the network device schedule Cell#2. If the number of sizes of DCIs in Cell#2 does not meet a preset condition, the process of performing a size alignment on the DCIs may include aligning a size of DCI 0_3 with a size of DCI 1_3. For example, if the size of DCI 1_3 is larger than the size of DCI 0_3, zero padding may be performed on DCI 0_3, for example, a bit with a value of 0 is added after the last bit of DCI 0_3, to cause the size of DCI 0_3 after zero padding to be the same as the size of DCI 1_3.

However, the network device transmits DCI 0_3 and DCI 0_1 to schedule Cell#4, and does not transmit DCI 1_3 to schedule Cell#4. That is, if the number of sizes of DCIs in Cell#4 does not meet a preset condition, there is no process of aligning the size of DCI 0_3 with the size of DCI 1_3, but aligning the size of DCI 0_3 with the size of DCI 0_1. Similarly, the network device transmits DCI 1_3 and DCI 1_1 to schedule Cell#1, and does not transmit DCI 0_3 to schedule Cell#1. If the number of DCI sizes in Cell#1 does not meet a preset condition, the size of DCI 1_3 may be aligned with the size of DCI 1_1 in Cell#1.

Since an alignment process in which DCI 0_3 in Cell#2 participates is different from an alignment process in which DCI 0_3 in Cell#4 participates, the size of DCI 0_3 transmitted in Cell#2 may be different from the size of DCI 0_3 transmitted in Cell#4. Similarly, since an alignment process in which DCI 1_3 in Cell#2 participates is different from an alignment process in which DCI 1_3 in Cell#1 participates, the size of DCI 1_3 transmitted in Cell#2 may be different from the size of DCI 1_3 transmitted in Cell#1.

This results in a problem that when the network device schedules multiple cells with one MC-DCI, the same MC-DCI has different sizes when scheduling different cells. The terminal and the network device have problems in determining the size of the MC-DCI actually transmitted.

FIG. 2 is a schematic flow chart of a method for determining a downlink control information size alignment according to an embodiment of the present disclosure. The method for determining the downlink control information size alignment according to this embodiment may be executed by a terminal. The terminal includes, but is not limited to, a communication device such as a mobile phone, a tablet computer, a wearable device, a sensor and an Internet of Things device. The terminal may communicate with a network device. The network device includes, but is not limited to, a network device in a 4G, 5G, 6G, and other communication systems, such as a base station, a core network, and the like.

As shown in FIG. 2, the method for determining the downlink control information size alignment may include the following steps.

In step S201, first downlink control information for scheduling multiple cells is received.

In step S202, a size alignment on pieces of legacy downlink control information in each cell scheduled by the first downlink control information, where in at least one first cell corresponding to the first downlink control information, a total number of a size of the first downlink control information and one or more sizes of the pieces of legacy downlink control information aligned is less than or equal to a first threshold.

In order to simplify the description in the subsequent embodiments, the first downlink control information is referred to as MC-DCI, and the legacy downlink control information is referred to as legacy DCI.

It should be noted that the DCI size alignment process in a certain cell shown in the embodiments of the present disclosure is performed under the premise that the number of DCI sizes in the cell does not meet a preset condition, and the preset condition includes a "k+1" condition, where k is equal to 3 or 4.

In an embodiment, the legacy DCI may also be referred to as existing DCI, and the legacy DCI includes at least one of: DCI 0_0, DCI 0_1, DCI 1_0, DCI 1_1, DCI 2_0, or DCI 2_1. The DCI size alignment process may refer to the prior art, which will not be described in the present disclosure.

In an embodiment, the network device may align sizes of legacy DCIs in each cell scheduled by the MC-DCI, to ensure that the sum of the number of a size of the MC-DCI and the number of sizes of aligned legacy DCIs is less than or equal to a first threshold, and then may transmit the MC-DCI and the aligned legacy DCI to a terminal.

According to an embodiment of the present disclosure, the terminal may receive the MC-DCI for scheduling multiple cells, may determine the multiple cells scheduled by the MC-DCI, and may determine the size alignment of legacy DCIs in each of the multiple cells. Since for each cell, the size alignment is performed on only the legacy DCIs in the cell, and the MC-DCI does not participate in the alignment, this helps to simplify the process of alignment deducing by the terminal. Furthermore, the sum of the number of the size of the MC-DCI and the number of the one or more sizes of the aligned legacy DCIs in multiple cells is less than or equal to a product of the number of the at least one first cell corresponding to the MC-DCI and a first number, which is helpful to ensure that the total number of sizes of DCIs in the at least one first cell will not be too large, thereby avoiding excessive complexity of DCI blind detection by the terminal.

Moreover, since the size alignment is performed on only the legacy DCIs, but not on the MC-DCI in each cell, the size of the MC-DCI remains unchanged across different cells, thereby avoiding a problem of the MC-DCI to be transmitted in different cells having different sizes when the above network device schedules multiple cells with one MC-DCI.

It should be noted that the DCI size alignment operation is performed by the network device. After performing the alignment operation, the network device transmits the DCI to the terminal. The terminal determines the size alignment of one or more DCIs by deducing the alignment process of the network device on the one or more DCIs, such as deducing the alignment process of the network device such as zero padding or truncation on the DCI, thereby determining the one or more sizes of the aligned DCIs for DCI blind detection. The terminal does not perform the alignment operation such as zero padding or truncation on the DCI.

In an embodiment, the first threshold is equal to the product of the number of the at least one first cell and the first number.

In an embodiment, the first number may be determined according to a protocol agreement or configured by the network device. For example, the first number may be 3 or 4.

In an embodiment, the first threshold may be indicated by the network device to the terminal, or may be agreed upon by a protocol.

For example, in a case that the first threshold is agreed upon by the protocol, the first threshold may be equal to the product of the number of the at least one first cell and the first number. The terminal may determine the number of the at least one first cell and then may calculate the product of the number of may at least one first cell and the first number, to take it as the first threshold.

For example, in a case that the first threshold is indicated by the network device to the terminal, the terminal may receive indication information transmitted by the network device and may determine the first threshold according to the indication information. The indication information includes but is not limited to at least one of: a radio resource control (RRC) signaling, a media-access-control control element (MAC CE), an MC-DCI, or a legacy DCI.

The following embodiments mainly illustrate the present disclosure in a case where the first threshold is equal to the product of the number of the at least one first cell and the first number.

In an embodiment, the pieces of legacy downlink control information in each cell scheduled by the first downlink control information satisfy a preset condition, and the preset condition includes:
the number of sizes of the pieces of legacy downlink control information scrambled by a cell radio network temporary identifier (C-RNTI) is less than or equal to a first number; and
the number of sizes of the pieces of legacy downlink control information scrambled by a radio network temporary identifier (RNTI) other than the C-RNTI is less than or equal to a second number.

In an embodiment, the first number is 3 or 4, and the second number is 1. For example, in a case that the first number is 3 and the second number is 1, the preset condition may be referred to as a "3+1" condition. That is, in one cell, the number of sizes of the legacy DCIs scrambled by the C-RNTI is less than or equal to 3, and the number of sizes of the legacy DCIs scrambled by the RNTI other than the C-RNTI is less than or equal to 1. Alternatively, it may also be expressed as, in one cell, the number of the sizes of the legacy DCIs is less than or equal to 4, where the number of the sizes of the legacy DCIs scrambled by the C-RNTI is less than or equal to 3.

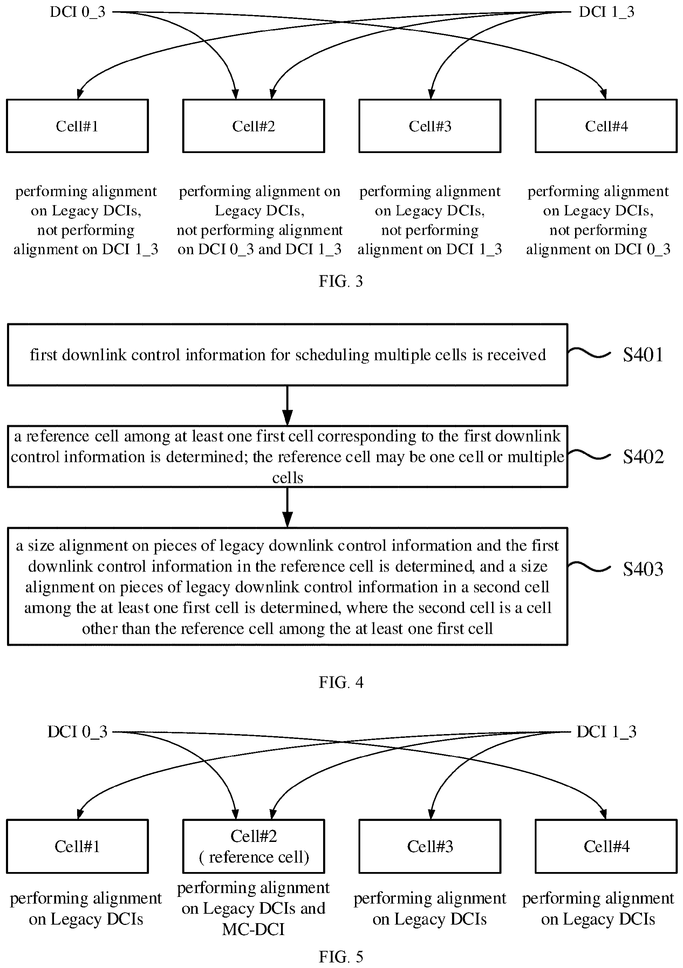

FIG. 3 is a schematic diagram showing another application scenario according to an embodiment of the present disclosure.

As shown in FIG. 3, the example is still given that an MC-DCI schedules four cells, and the four cells are Cell#1, Cell#2, Cell#3, and Cell#4, respectively.

The MC-DCI includes an MC-DCI for scheduling uplink transmissions of multiple cells, such as DCI 0_3, and an MC-DCI for scheduling downlink transmissions of multiple cells, such as DCI 1_3. DCI 0_3 is used to schedule uplink transmissions of Cell#2 and Cell#4, and DCI 1_3 is used to schedule downlink transmissions of Cell#1, Cell#2 and Cell#3.

For example, in Cell#1, the DCI received by the terminal includes DCI 1_3, DCI 1_1, and DCI 0_1. In Cell#2, the DCI received by the terminal includes DCI 0_3 and DCI 1_3. In Cell#3, the DCI received by the terminal includes DCI 1_3. In Cell#4, the DCI received by the terminal includes DCI 0_3, DCI 1_1, and DCI 0_1.

DCI 1_1 and DCI 0_1 each belongs to the legacy DCI; and DCI 0_3 and DCI 1_3 each belongs to the MC-DCI.

According to embodiments of the present disclosure, the sizes of the legacy DCIs are aligned in each cell, the MC-DCI does not participate in the alignment.

Therefore, the terminal may determine that in Cell#1, the sizes of the legacy DCIs such as DCI 1_1 and DCI 0_1 are aligned, and DCI 1_3 does not participate in the alignment; and may determine that in Cell#2, the sizes of the legacy DCIs are aligned, and DCI 0_3 and DCI 1_3 do not participate in the alignment; and may determine that in Cell#3, the sizes of the legacy DCIs are aligned, and DCI 1_3 does not participate in the alignment; and may determine that in Cell#4, the sizes of the legacy DCIs such as DCI 1_1 and DCI 0_1 are aligned, and DCI 0_3 does not participate in the alignment.

It may be seen that in the four cells, DCI 0_3 and DCI 1_3 do not participate in the alignment, so the sizes of DCI 0_3 and DCI 1_3 remain unchanged. In this way, when the network device schedules multiple cells with one MC-DCI, the sizes of the MC-DCI to be transmitted on different cells may remain the same. For example, when Cell#2 and Cell#4 are scheduled through DCI 0_3, sizes of DCI 0_3 transmitted on Cell#2 and Cell#4 may be the same.

It should be noted that the at least one first cell corresponding to the MC-DCI may include only one or more cells among cells actually scheduled by the MC-DCI, or may include cells other than the cells actually scheduled by the MC-DCI.

For example, cells that may be scheduled by the MC-DCI include Cell#1, Cell#2, Cell#3, Cell#4, Cell#5, and Cell#6, a total of 6 cells. Cells actually scheduled by the MC-DCI at a certain time are Cell#1, Cell#2, Cell#3, and Cell#4.

In this case, the at least one first cell corresponding to the MC-DCI may be one or more cells among Cell#1, Cell#2, Cell#3, and Cell#4, or one or more cells among Cell#1, Cell#2, Cell#3, Cell#4, Cell#5, and Cell#6.

The at least one first cell corresponding to the MC-DCI is exemplarily described below with several embodiments.

In an embodiment, the at least one first cell is any one of the multiple cells scheduled by the first downlink control information. Then, in any cell scheduled by the MC-DCI, the total number of the size of the MC-DCI and the one or more sizes of the aligned legacy DCIs is less than or equal to the product of the number of the at least one first cell and the first number.

Since the at least one first cell is any one of the multiple cells scheduled by the first downlink control information, the number of the at least one first cell is 1. For example, the first number is 3. Then, in any cell scheduled by the MC-DCI, the total number of the size of the MC-DCI and the one or more sizes the aligned legacy DCIs is less than or equal to 3.

In an embodiment, the first downlink control information includes at least one of:
first downlink control information for scheduling a downlink transmission, such as DCI 1_3; or
first downlink control information for scheduling an uplink transmission, such as DCI 0 _3.

For the convenience of illustration below, DCI 1_3 refers to the first downlink control information for scheduling the downlink transmission, and DCI 0_3 refers to the first downlink control information for scheduling the uplink transmission.

In an embodiment, the at least one cell includes a cell(s) actually scheduled by the MC-DCI, or the at least one cell includes a cell(s) that may be scheduled by the MC-DCI. The cell(s) that may be scheduled by the MC-DCI includes the cell(s) actually scheduled by the MC-DCI. The cell(s) that may be scheduled by the MC-DCI may be determined according to an agreement by a protocol or configured by the network device, and the cell(s) actually scheduled by the MC-DCI is one or more cells determined in the cell(s) that may be scheduled by the MC-DCI, and the cells actually scheduled by the MC-DCI may be different each time.

For example, at least one cell may be represented by a cell set. In an embodiment, the at least one first cell includes at least one of:
a cell included in a cell set corresponding to the first downlink control information for scheduling the downlink transmission;
a cell included in a cell set corresponding to the first downlink control information for scheduling the uplink transmission; or
a cell included in a cell set corresponding to the first downlink control information for scheduling the uplink transmission and in a cell set corresponding to the first downlink control information for scheduling the uplink transmission.

In an embodiment, the at least one first cell is a cell included in a cell set corresponding to DCI 1_3, and the number of the at least one first cell is the number of cells in the cell set corresponding to DCI 1_3.

For example, the cell set corresponding to DCI 1_3 is a cell set consisting of cells that may be scheduled by DCI 1_3. For example, the number of cells that may be scheduled by DCI 1_3 is 4, so at least one first cell is these 4 cells, that is, the number of the at least one first cell is 4.

Taking the first number equal to 3 as an example, in the at least one first cell corresponding to DCI 1_3, a total number of a size of DCI 1_3 and one or more sizes of legacy DCIs aligned is less than or equal to a product of the number 4 of the at least one first cell and the first number 3, that is, 12.

For example, the cell set corresponding to DCI 1_3 is a cell set composed of cells actually scheduled by DCI 1_3. For example, the number of cells that may be scheduled by DCI 1_3 is 3, so the at least one first cell is these 3 cells, that is, the number of the at least one first cell is 3.

Taking the first number equal to 3 as an example, in the at least one first cell corresponding to DCI 1_3, a total number of a size of DCI 1_3 and one or more sizes of legacy DCIs aligned is less than or equal to the product of the number 3 of at least one first cell and the first number 3, that is, 9.

In an embodiment, the at least one first cell is a cell included in a cell set corresponding to DCI 0_3, and the number of the at least one first cell is the number of cells in the cell set corresponding to DCI 0_3.

For example, the cell set corresponding to DCI 0_3 is a cell set composed of cells that may be scheduled by DCI 0_3. For example, the number of cells that may be scheduled by DCI 0_3 is 4, so the at least one first cell is these 4 cells, that is, the number of the at least one first cell is 4.

Taking the first number equal to 3 as an example, in the at least one first cell corresponding to DCI 0_3, a total number of a size of DCI 0_3 and one or more sizes of legacy DCIs aligned is less than or equal to the product of the number of at least one first cell 4 and the first number 3, that is, 12.

For example, the cell set corresponding to DCI 1_3 is a cell set composed of cells that may be scheduled by DCI 1_3. For example, the number of cells that may be scheduled by DCI 1_3 is 3, so the at least one first cell is these two cells, that is, the number of the at least one first cell is 3.

Taking the first number equal to 3 as an example, in the at least one first cell corresponding to DCI 1_3, a total number of a size of DCI 1_3 and one or more sizes of legacy DCIs aligned is less than or equal to the product of the number 3 of the at least one first cell and the first number 3, that is, 9.

In an embodiment, at least one first cell is a cell included in a cell set corresponding to DCI 0_3 and in a cell set corresponding to DCI 1_3, and the number of the at least one first cell is the number of cells in the cell set corresponding to DCI 0_3 and in the cell set corresponding to DCI 1_3, that is, the number of cells depends upon the union of the cell set corresponding to DCI 0_3 and the cell set corresponding to DCI 1_3.

For example, the cell set corresponding to DCI 0_3 is a cell set consisting of cells that may be scheduled by DCI 0_3, and the cell set corresponding to DCI 1_3 is a cell set consisting of cells that may be scheduled by DCI 1_3. The cells that may be scheduled by DCI 0_3 are Cell#1, Cell#2, Cell#3, and Cell#5, and the cells that may be scheduled by DCI 1_3 are Cell#1, Cell#2, Cell#4, and Cell#6. In this case, cells included in the cell set {Cell#1, Cell#2, Cell#3, and Cell#5} corresponding to DCI 0_3 and in the cell set {Cell#1, Cell#2, Cell#4, and Cell#6} corresponding to DCI 1_3 are Cell#1, Cell#2, Cell#3, Cell#4, Cell#5, and Cell#6, so the number of the at least one first cell is 6.

Taking the first number equal to 3 as an example, in the at least one first cell corresponding to DCI 0_3 and DCI 1_3, a total number of sizes of DCI 0_3 and DCI 1_3 and one or more sizes of aligned legacy DCIs is less than or equal to a product of the number 6 of the at least one first cell and the first number 3, that is, 18.

For example, the cell set corresponding to DCI 0_3 is a cell set consisting of cells actually scheduled by DCI 0_3, and the cell set corresponding to DCI 1_3 is a cell set consisting of cells actually scheduled by DCI 1_3. The cells actually scheduled by DCI 0_3 are Cell#1, Cell#2, and Cell#3, and the cells actually scheduled by DCI 1_3 are Cell#2 and Cell#4. In this case, cells included in the cell set {Cell#1, Cell#2, Cell#3} corresponding to DCI 0_3 and in the cell set {Cell#2, Cell#4} corresponding to DCI 1_3 are Cell#1, Cell#2, Cell#3, and Cell#4, so the number of the at least one first cell is 4.

Taking the first number equal to 3 as an example, in the at least one first cell corresponding to DCI 1_3, a total number of a size of DCI 1_3 and one or more sizes of aligned legacy DCI is less than or equal to a product of the number 3 of the at least one first cell and the first number 3, that is, 9.

Regarding which of the above embodiments is used to determine the at least one first cell, the terminal may determine it according to a predefined rule, or according to an instruction from a network device, or according to a capability reported by the terminal.

It should be noted that the cell set is not limited to the above two situations, that is, the cell set consisting of cells that may be scheduled by the MC-DCI and the cell set consisting of cells actually scheduled by the MC-DCI. The cell set is exemplarily described below with several embodiments.

In an embodiment, the cell set includes at least one of:
a cell set composed of the cells actually scheduled by the MC-DCI, where, for example, the cell set corresponding to DCI 0_3 is the cell set composed of the cells actually scheduled by DCI 0_3, and for another example, the cell set corresponding to DCI 1_3 is the cell set composed of the cells actually scheduled by DCI 1_3;
a cell set consisting of cells that may be scheduled by the MC-DCI, where, for example, the cell set corresponding to DCI 0_3 is the cell set consisting of the cells that may be scheduled by DCI 0_3, and for another example, the cell set corresponding to DCI 1_3 is the cell set consisting of the cells that may be scheduled by DCI 1_3;
a cell set consisting of cells having the same configuration parameter, where the configuration parameter include but is not limited to an identifier of a set, an identifier of a cell, a sequence number, and a carrier indicator field (CIF);
a cell set determined according to a signaling transmitted by the network device, where, for example, the cell set corresponding to DCI 0_3 is a cell set determined according to a signaling received by a cell actually scheduled by DCI 0_3, for example, a cell set corresponding to DCI 1_3 is a cell set determined according to a signaling received by a cell actually scheduled by DCI 1_3; or
a set of cells determined according to a predefined rule.

In an embodiment, in any cell of multiple cells scheduled by the first downlink control information for scheduling the downlink transmission, the number of the one or more sizes of the pieces of legacy downlink control information aligned is less than or equal to a third number; or
in any cell of multiple cells scheduled by the first downlink control information for scheduling the uplink transmission, the number of the one or more sizes of the pieces of legacy downlink control information aligned is less than or equal to a third number; or
in any cell of multiple cells scheduled by the first downlink control information for scheduling the uplink transmission and multiple cells scheduled by the first downlink control information for scheduling the uplink transmission, the number of the one or more sizes of the pieces of legacy downlink control information aligned is less than or equal to a third number.

In an embodiment, the third number is 2 or 3.

In an embodiment, the network device may adjust a configuration to enable the number of sizes of aligned legacy DCIs in any one of the multiple cells scheduled by DCI 0_3 to be less than or equal to the third number.

Accordingly, in any one of the multiple cells scheduled by DCI 0_3, the number of sizes of the aligned legacy DCIs is relatively small, so as to ensure that in at least one first cell corresponding to DCI 0_3, the total number of a size of DCI 0_3 and the sizes of the aligned legacy DCIs is less than or equal to the product of the number of the at least one first cell and the first number.

For example, the third number is 2. Although DCI 0_3 is introduced in the cell scheduled by DCI 0_3, it is still able to ensure that in the at least one first cell corresponding to DCI 0_3, the total number of the size of DCI 0_3 and the sizes of the aligned legacy DCIs is less than or equal to the product of the number of the at least one first cell and the first number.

For example, the number of at least one first cell corresponding to DCI 0_3 is 1, the first number is 3, and the product of the number of the at least one first cell and the first number is equal to 3. For example, the number of sizes of aligned legacy DCIs is equal to the third number 2, and the number of the size of DCI 0_3 is 1, then the total number of the size of DCI 0_3 and the sizes of the aligned legacy DCIs is 3, which is equal to the product of the number of the at least one first cell and the first number 3.

In an embodiment, the network device may adjust a configuration to enable the number of sizes of aligned legacy DCIs in any one of the multiple cells scheduled by DCI 1_3 to be less than or equal to the third number.

Accordingly, in any one of the multiple cells scheduled by DCI 1_3, the number of sizes of the aligned legacy DCIs is relatively small, so as to ensure that in at least one first cell corresponding to DCI 1_3, the total number of a size of DCI 1_3 and the sizes of the aligned legacy DCIs is less than or equal to the product of the number of the at least one first cell and the first number.

For example, the third number is 3. Although DCI 1_3 is introduced in the cell scheduled by DCI 1_3, it is still able to ensure that in the at least one first cell corresponding to DCI 1_3, a total number of the size of DCI 1_3 and one or more sizes of the aligned legacy DCIs is less than or equal to the product of the number of the at least one first cell and the first number.

For example, the number of at least one first cell corresponding to DCI 1_3 is 1, the first number is 4, and the product of the number of the at least one first cell and the first number is equal to 4. For example, the number of sizes of aligned legacy DCIs is equal to the third number 3, and the number of the size of DCI 1_3 is 1, then the total number of the size of DCI 1_3 and the sizes of the aligned legacy DCIs is 3, which is less than the product of the number of the at least one first cell and the first number 3.

In an embodiment, the network device may adjust a configuration to enable the number of sizes of aligned legacy DCIs in any cell of the multiple cells scheduled by DCI 0_3 and the multiple cells scheduled by DCI 1_3 to be less than or equal to the third number.

Accordingly, in any cell of the multiple cells scheduled by DCI 0_3 and of the multiple cells scheduled by DCI 1_3, the number of sizes of aligned legacy DCIs is relatively small, so as to ensure that in at least one first cell of the multiple cells corresponding to DCI 0_3 and in at least one first cell of the multiple cells corresponding to DCI 1_3, a total number of sizes of DCI 0_3 and DCI 1_3 and the sizes of the aligned legacy DCIs is less than or equal to the product of the number of the at least one first cell and the first number.

For example, the third number is 2. Although DCI 0_3 is introduced in the cell scheduled by DCI 0_3, and DCI 1_3 is introduced in the cell scheduled by DCI 1_3, it is still able to ensure that in at least one first cell corresponding to DCI 1_3 and DCI 1_3, the total number of the sizes of DCI 1_3 and DCI 1_3, and the sizes of the aligned legacy DCIs is less than or equal to the product of the number of the at least one first cell and the first number.

For example, the number of the at least one first cell corresponding to DCI 0_3 and DCI 1_3 is 1, the first number is 4, and the product of the number of at least one first cell and the first number is equal to 4. For example, the number of sizes of aligned legacy DCIs is equal to the third number 2, the number of sizes of DCI 0_3 and DCI 1_3 is 2, then the total number of the sizes of DCI 0_3 and DCI 1_3 and the sizes of the aligned legacy DCIs is 4, which is equal to the product 4 of the number of the at least one first cell and the first number.

FIG. 4 is a schematic flow chart of a method for determining a downlink control information size alignment according to an embodiment of the present disclosure. The method for determining the downlink control information size alignment described in this embodiment may be executed by a terminal. The terminal includes but is not limited to a communication device such as a mobile phone, a tablet computer, a wearable device, a sensor and an Internet of Things device. The terminal may communicate with a network device, and the network device includes but is not limited to a network device in a 4G, 5G, 6G, and other communication systems, such as a base station, a core network, and the like.

As shown in FIG. 4, the method for determining the downlink control information size alignment may include the following steps.

In step S401, first downlink control information for scheduling multiple cells is received.

In step S402, a reference cell among at least one first cell corresponding to the first downlink control information is determined. The reference cell may be one cell or multiple cells.

In step S403, a size alignment on pieces of legacy downlink control information and the first downlink control information in the reference cell is determined, and a size alignment on pieces of legacy downlink control information in a second cell among the at least one first cell is determined, where the second cell is a cell other than the reference cell among the at least one first cell.

In order to simplify descriptions in the subsequent embodiments, an MC-DCI is used to refer to the first downlink control information, and a legacy DCI is used to refer to the legacy downlink control information.

It should be noted that the DCI size alignment process in a certain cell shown in this embodiment of the present disclosure is performed under the premise that the number of DCI sizes in the cell does not meet a preset condition, and the preset condition includes a "k+1" condition, where k is equal to 3 or 4.

In an embodiment, the legacy DCI may also be referred to as existing DCI, and the legacy DCI includes at least one of: DCI 0_0, DCI 0_1, DCI 1_0, DCI 1_1, DCI 2_0, or DCI 2_1. The DCI size alignment process may refer to the prior art, which will not be described in the present disclosure.

In an embodiment, the network device may determine the reference cell among at least one first cell corresponding to the MC-DCI. The size alignment is performed on DCIs in the reference cell, and the DCIs participating in the alignment process include the MC-DCI and the legacy DCIs. The size alignment is performed on DCIs in the cell other than the reference cell among the at least one first cell, and the DCIs participating in the alignment process include the legacy DCIs, but do not include the MC-DCI. The DCI may be transmitted to the terminal.

According to embodiments of the present disclosure, the terminal may receive the MC-DCI for scheduling multiple cells, may determine at least one first cell corresponding to the MC-DCI, and may determine that the legacy DCIs and the MC-DCI participate in the DCI size alignment process in the reference cell, and that only the legacy DCIs participate in the DCI size alignment process in the cell other than the reference cell among the at least one first cell.

Since only the legacy DCIs in the cell other than the reference cell among the at least one first cell participate in the DCI size alignment process, and the MC-DCI does not participate in the alignment process, it is helpful to simplify deduction alignment process by the terminal. Furthermore, both the legacy DCIs and the MC-DCI in the reference cell among the at least one first cell participate in the alignment process, which is helpful to ensure that the total number of sizes of DCIs in the at least one first cell will not be too large, thereby avoiding excessive complexity of DCI blind detection by the terminal.

Moreover, since in the cells other than the reference cell, the size alignment is performed on only the legacy DCIs, but is not performed on the MC-DCI, the size of the MC-DCI remains unchanged across different cells, thereby avoiding a problem that MC-DCIs with different sizes need to be transmitted in different cells among the cells other than the reference cell when the above network device schedules multiple cells with one MC-DCI.

It should be noted that the DCI size alignment operation is performed by the network device. After performing the alignment operation, the network device transmits the DCI to the terminal. The terminal determines the size alignment of one or more DCIs by deducing the alignment process of the network device on the one or more DCIs, such as deducing the alignment process of the network device such as zero padding or truncation on the DCI, thereby determining the one or more sizes of the aligned DCIs for DCI blind detection. The terminal does not perform the alignment operation such as zero padding or truncation on the DCI.

In an embodiment, the pieces of legacy downlink control information in each cell scheduled by the first downlink control information satisfy a preset condition, and the preset condition includes:
the number of sizes of the pieces of legacy downlink control information scrambled by a cell radio network temporary identifier (C-RNTI) is less than or equal to a first number; and
the number of sizes of the pieces of legacy downlink control information scrambled by a radio network temporary identifier (RNTI) other than the C-RNTI is less than or equal to a second number.

In an embodiment, the first number is 3 or 4, and the second number is 1. For example, in a case that the first number is 3 and the second number is 1, the preset condition may be referred to as a "3+1" condition. That is, in one cell, the number of sizes of the legacy DCIs scrambled by the C-RNTI is less than or equal to 3, and the number of sizes of the legacy DCIs scrambled by the RNTI other than the C-RNTI is less than or equal to 1. Alternatively, it may also be expressed as, in one cell, the number of the sizes of the legacy DCIs is less than or equal to 4, where the number of the sizes of the legacy DCIs scrambled by the C-RNTI is less than or equal to 3.

FIG. 5 is a schematic diagram showing another application scenario according to an embodiment of the present disclosure.

As shown in FIG. 5, the example is still given that an MC-DCI schedules four cells, and the four cells are Cell#1, Cell#2, Cell#3, and Cell#4, respectively.

The MC-DCI includes an MC-DCI for scheduling uplink transmissions of multiple cells, such as DCI 0_3, and an MC-DCI for scheduling downlink transmissions of multiple cells, such as DCI 1_3. DCI 0_3 is used to schedule uplink transmissions of Cell#2 and Cell#4, and DCI 1_3 is used to schedule downlink transmissions of Cell#1, Cell#2 and Cell#3.

For example, in Cell#1, the DCI received by the terminal includes DCI 1_3, DCI 1_1, and DCI 0_1. In Cell#2, the DCI received by the terminal includes DCI 0_3 and DCI 1_3. In Cell#3, the DCI received by the terminal includes DCI 1_3. In Cell#4, the DCI received by the terminal includes DCI 0_3, DCI 1_1, and DCI 0_1.

DCI 1_1 and DCI 0_1 each belongs to the legacy DCI; and DCI 0_3 and DCI 1_3 each belongs to the MC-DCI.

According to an embodiment of the present disclosure, for example, the at least one cell is Cell#1, Cell#2, Cell#3, and Cell#4, where the reference cell is Cell#2, and the cells other than the reference cell are Cell#1, Cell#3, and Cell#4.

In Cell#2, both the legacy DCI and the MC-DCI may participate in the alignment process when the network device performs the DCI size alignment, so sizes of DCI 0_3 and DCI 1_3 may be aligned.

In Cell#1, Cell#3, and Cell#4, when the network device performs the DCI size alignment, only the legacy DCI participates in the alignment process, and the MC-DCI does not participate in the alignment process. Therefore, it is not necessary to align the size of the MC-DCI with that of the legacy DCI. For example, in Cell#1, the sizes of legacy DCIs such as DCI 1_1 and DCI 0_1 may be aligned, and the size of DCI 1_3 does not need to be aligned with the size of DCI 1_1 or DCI 0_1. For example, in Cell#2, both the legacy DCI and the MC-DCI participate in the alignment process, and for example, the alignment process includes size alignment of DCI 1_3 or DCI 0_3. For example, in Cell#3, the sizes of legacy DCIs may be aligned, and the size of DCI 1_3 does not need to be aligned with the size of the legacy DCI. For example, in Cell#4, the sizes of DCI 0_1 of DCI 1_1 may be aligned, and the size of DCI 0_3 does not need to be aligned with the size of DCI 1_1 or DCI 0_1.

Correspondingly, the terminal may determine that in Cell#1, the sizes of DCI 1_1 and DCI 0_1 are aligned, and DCI 1_3 does not participate in the alignment; in Cell#2, the sizes of DCI 0_3 and DCI 1_3 are aligned; in Cell#3, the sizes of the legacy DCIs participates in the alignment, and DCI 1_3 does not participate in the alignment; and in Cell#4, the sizes of DCI 1_1 and DCI 0_1 are aligned, and DCI 0_3 does not participate in the alignment.

It may be seen that among the four cells, the alignment is performed on DCI 0_3 and DCI 1_3 only in the reference cell, and the alignment is not performed on DCI 0_3 and DCI 1_3 in the cells other than the reference cell. Therefore, the sizes of DCI 0_3 and DCI 1_3 in the cells other than the reference cell do not change. When the network device schedules multiple cells with one MC-DCI, sizes of the MC-DCI to be transmitted on the cells other than the reference cell may remain the same. For example, when Cell#1 and Cell#3 are scheduled through DCI 1_3, sizes of DCI 1_3 transmitted on Cell#1 and Cell#3 may be the same.

It should be noted that the at least one first cell corresponding to the MC-DCI may include only one or more cells among the cells actually scheduled by the MC-DCI, or may include cells other than the cells actually scheduled by the MC-DCI.

For example, the cells that may be scheduled by the MC-DCI include Cell#1, Cell#2, Cell#3, Cell#4, Cell#5, and Cell#6, a total of 6 cells. Cells actually scheduled by the MC-DCI at a certain time are Cell#1, Cell#2, Cell#3, and Cell#4.

The at least one first cell corresponding to the MC-DCI may be one or more cells among Cell#1, Cell#2, Cell#3, and Cell#4, or one or more cells among Cell#1, Cell#2, Cell#3, Cell#4, Cell#5, and Cell#6.

The at least one first cell corresponding to the MC-DCI is exemplarily described below with several embodiments.

In an embodiment, the first downlink control information includes at least one of:
first downlink control information for scheduling a downlink transmission, such as DCI 1_3; or
first downlink control information for scheduling an uplink transmission, such as DCI 0_3.

For the convenience of illustration below, DCI 1_3 refers to the first downlink control information for scheduling the downlink transmission, and DCI 0_3 refers to the first downlink control information for scheduling the uplink transmission.

In an embodiment, the at least one cell includes cells actually scheduled by the MC-DCI, or the at least one cell includes cells that may be scheduled by the MC-DCI. The cells that may be scheduled by the MC-DCI include the cells actually scheduled by the MC-DCI. The cells that may be scheduled by the MC-DCI may be determined according to a protocol agreement or configured by the network device, and the cells actually scheduled by the MC-DCI are one or more cells determined from the cells that may be scheduled by the MC-DCI, and the cells actually scheduled by the MC-DCI may be different each time.

For example, the at least one cell may be represented by a cell set. In an embodiment, the at least one first cell includes at least one of:
a cell included in a cell set corresponding to the first downlink control information for scheduling the downlink transmission;
a cell included in a cell set corresponding to the first downlink control information for scheduling the uplink transmission; or
a cell included in a cell set corresponding to the first downlink control information for scheduling the uplink transmission and in a cell set corresponding to the first downlink control information for scheduling the uplink transmission.

In an embodiment, the at least one first cell is a cell included in a cell set corresponding to DCI 1_3. For example, the cell set corresponding to DCI 1_3 is a cell set consisting of cells that may be scheduled by DCI 1_3, or the cell set corresponding to DCI 1_3 is a cell set consisting of cells actually scheduled by DCI 1_3.

In an embodiment, the at least one first cell is a cell included in a cell set corresponding to DCI 0_3. For example, the cell set corresponding to DCI 0_3 is a cell set consisting of cells that may be scheduled by DCI 0_3, or the cell set corresponding to DCI 1_3 is a cell set consisting of cells actually scheduled by DCI 0_3.

In an embodiment, the at least one first cell is a cell included in a cell set corresponding to DCI 0_3 and in a cell set corresponding to DCI 1_3.

For example, the cell set corresponding to DCI 0_3 is a cell set consisting of cells that may be scheduled by DCI 0_3, and the cell set corresponding to DCI 1_3 is a cell set consisting of cells that may be scheduled by DCI 1_3. The cells that may be scheduled by DCI 0_3 are Cell#1, Cell#2, Cell#3, and Cell#5, and the cells that may be scheduled by DCI 1_3 are Cell#1, Cell#2, Cell#4, and Cell#6. In this case, cells included in the cell set {Cell#1, Cell#2, Cell#3, and Cell#5} corresponding to DCI 0_3 and in the cell set {Cell#1, Cell#2, Cell#4, and Cell#6} corresponding to DCI 1_3 are Cell#1, Cell#2, Cell#3, Cell#4, Cell#5, and Cell#6.

For example, the cell set corresponding to DCI 0_3 is a cell set consisting of cells actually scheduled by DCI 0_3, and the cell set corresponding to DCI 1_3 is a cell set consisting of cells actually scheduled by DCI 1_3. The cells actually scheduled by DCI 0_3 are Cell#1, Cell#2, and Cell#3, and the cells actually scheduled by DCI 1_3 are Cell#2 and Cell#4. In this case, cells included in the cell set {Cell#1, Cell#2, Cell#3} corresponding to DCI 0_3 and in the cell set {Cell#2, Cell#4} corresponding to DCI 1_3 are Cell#1, Cell#2, Cell#3, and Cell#4.

Regarding which of the above embodiments is used to determine the at least one first cell, the terminal may determine it according to a predefined rule, or according to an instruction from the network device, or according to a terminal capability reported by the terminal.

It should be noted that the cell set is not limited to the above two cases, that is, the cell set consisting of the cells that may be scheduled by the MC-DCI and the cell set consisting of the cells actually scheduled by the MC-DCI. The cell set is exemplarily described below with several embodiments.

In an embodiment, the cell set includes at least one of:
a cell set composed of the cells actually scheduled by the MC-DCI, where, for example, the cell set corresponding to DCI 0_3 is the cell set composed of the cells actually scheduled by DCI 0_3, and for another example, the cell set corresponding to DCI 1_3 is the cell set composed of the cells actually scheduled by DCI 1_3;
a cell set consisting of cells that may be scheduled by the MC-DCI, where, for example, the cell set corresponding to DCI 0_3 is the cell set consisting of the cells that may be scheduled by DCI 0_3, and for another example, the cell set corresponding to DCI 1_3 is the cell set consisting of the cells that may be scheduled by DCI 1_3;
a cell set consisting of cells having the same configuration parameter, where the configuration parameter include but is not limited to an identifier of a set, an identifier of a cell, a sequence number, and a carrier indicator field (CIF);
a cell set determined according to a signaling transmitted by the network device, where, for example, the cell set corresponding to DCI 0_3 is a cell set determined according to a signaling received by a cell actually scheduled by DCI 0_3, for example, a cell set corresponding to DCI 1_3 is a cell set determined according to a signaling received by a cell actually scheduled by DCI 1_3; or
a set of cells determined according to a predefined rule.

In an embodiment, the reference cell includes at least one of:
a cell with a smallest cell index among the at least one first cell;
a cell with a largest cell index among the at least one first cell;
a cell with a smallest number of sizes of pieces of legacy downlink control information configured among the at least one first cell;
a cell for calculating a blind detection resource (e.g., blind detection (BD), and control channel element (CCE)) among the at least one first cell; or
a cell configured with a search space corresponding to the first downlink control information among the at least one first cell.

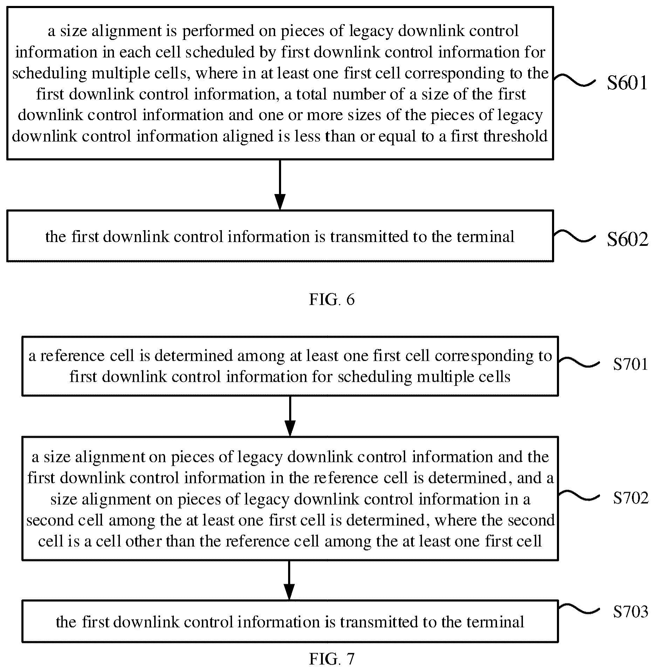

FIG. 6 is a schematic flow chart of a method for performing a downlink control information size alignment according to an embodiment of the present disclosure. The method for performing the downlink control information size alignment according to this embodiment may be executed by a network device, and the network device may communicate with a terminal. The network device includes but is not limited to a base station in a communication system such as a 4G base station, a 5G base station, and a 6G base station. The terminal includes but is not limited to a mobile phone, a tablet computer, a wearable device, a sensor an Internet of Things device, and other communication devices.

As shown in FIG. 6, the method for performing the downlink control information size alignment may include the following steps.

In step S601, a size alignment is performed on pieces of legacy downlink control information in each cell scheduled by first downlink control information for scheduling multiple cells, where in at least one first cell corresponding to the first downlink control information, a total number of a size of the first downlink control information and one or more sizes of the pieces of legacy downlink control information aligned is less than or equal to a first threshold.

In step S602, the first downlink control information is transmitted to the terminal.

For the sake of simplicity in description in the subsequent embodiments, the first downlink control information is referred to as MC-DCI, and the legacy downlink control information is referred to as legacy DCI.

In an embodiment, the legacy DCI may also be referred to as existing DCI, and the legacy DCI includes at least one of: DCI 0_0, DCI 0_1, DCI 1_0, DCI 1_1, DCI 2_0, or DCI 2_1. The DCI size alignment process may refer to the prior art, which will not be described in the present disclosure.

According to an embodiment of the present disclosure, the network device may perform alignment on sizes of the legacy DCIs in each cell scheduled by the MC-DCI, to ensure that a sum of the number of the size of the MC-DCI and the number of the sizes of the aligned legacy DCIs is less than or equal to the first threshold, and then may transmit the MC-DCI and the aligned legacy DCIs to the terminal.

After receiving the MC-DCI for scheduling multiple cells, the terminal may determine the multiple cells scheduled by the MC-DCI, and may determine the size alignment of legacy DCIs in each of the multiple cells. Since for each cell, the size alignment is performed on only the legacy DCIs in the cell, and the MC-DCI does not participate in the alignment, this helps to simplify the process of alignment deducing by the terminal. Furthermore, the sum of the number of the size of the MC-DCI and the number of the one or more sizes of the aligned legacy DCIs in multiple cells is less than or equal to a product of the number of the at least one first cell corresponding to the MC-DCI and a first number, which is helpful to ensure that the total number of sizes of DCIs in the at least one first cell will not be too large, thereby avoiding excessive complexity of DCI blind detection by the terminal.

Moreover, since the size alignment is performed on only the legacy DCIs, but not on the MC-DCI in each cell, the size of the MC-DCI remains unchanged across different cells, thereby avoiding a problem of the MC-DCI to be transmitted in different cells having different sizes when the above network device schedules multiple cells with one MC-DCI.

It should be noted that the DCI size alignment operation is performed by the network device. After performing the alignment operation, the network device transmits the DCI to the terminal. The terminal determines the size alignment of one or more DCIs by deducing the alignment process of the network device on the one or more DCIs, such as deducing the alignment process of the network device such as zero padding or truncation on the DCI, thereby determining the one or more sizes of the aligned DCIs for DCI blind detection. The terminal does not perform the alignment operation such as zero padding or truncation on the DCI.

In an embodiment, the first threshold is equal to the product of the number of the at least one first cell and the first number.

In an embodiment, the first number may be determined according to a protocol agreement or configured by the network device. For example, the first number may be 3 or 4.

In an embodiment, the first threshold may be indicated by the network device to the terminal, or may be agreed upon by a protocol.

For example, in a case that the first threshold is agreed upon by the protocol, the first threshold may be equal to the product of the number of the at least one first cell and the first number. The terminal may determine the number of the at least one first cell and then may calculate the product of the number of may at least one first cell and the first number, to take it as the first threshold.

For example, in a case that the first threshold is indicated by the network device to the terminal, the terminal may receive indication information transmitted by the network device and may determine the first threshold according to the indication information. The indication information includes but is not limited to at least one of: a radio resource control (RRC) signaling, a media-access-control control element (MAC CE), an MC-DCI, or a legacy DCI.

The following embodiments mainly illustrate the present disclosure in a case where the first threshold is equal to the product of the number of the at least one first cell and the first number.

In an embodiment, the pieces of legacy downlink control information in each cell scheduled by the first downlink control information satisfy a preset condition, and the preset condition includes:
the number of sizes of the pieces of legacy downlink control information scrambled by a cell radio network temporary identifier (C-RNTI) is less than or equal to a first number; and
the number of sizes of the pieces of legacy downlink control information scrambled by a radio network temporary identifier (RNTI) other than the C-RNTI is less than or equal to a second number.

In an embodiment, the first number is 3 or 4, and the second number is 1. For example, in a case that the first number is 3 and the second number is 1, the preset condition may be referred to as a "3+1" condition. That is, in one cell, the number of one or more sizes of the legacy DCIs scrambled by the C-RNTI is less than or equal to 3, and the number of one or more sizes of the legacy DCIs scrambled by the RNTI other than the C-RNTI is less than or equal to 1. Alternatively, it may also be expressed as, in one cell, the number of the one or more sizes of the legacy DCIs is less than or equal to 4, where the number of the one or more sizes of the legacy DCIs scrambled by the C-RNTI is less than or equal to 3.

The at least one first cell corresponding to the MC-DCI is exemplarily described below with several embodiments.

In an embodiment, the at least one first cell is any one of the multiple cells scheduled by the first downlink control information. Then, in any cell scheduled by the MC-DCI, the total number of the size of the MC-DCI and the one or more sizes of the aligned legacy DCIs is less than or equal to the product of the number of the at least one first cell and the first number.

Since the at least one first cell is any one of the multiple cells scheduled by the first downlink control information, the number of the at least one first cell is 1. For example, the first number is 3. Then, in any cell scheduled by the MC-DCI, the total number of the size of the MC-DCI and the one or more sizes the aligned legacy DCIs is less than or equal to 3.

In an embodiment, the first downlink control information includes at least one of:
first downlink control information for scheduling a downlink transmission, such as DCI 1_3; or
first downlink control information for scheduling an uplink transmission, such as DCI 0_3.

For the convenience of illustration below, DCI 1_3 refers to the first downlink control information for scheduling the downlink transmission, and DCI 0_3 refers to the first downlink control information for scheduling the uplink transmission.

In an embodiment, the at least one first cell includes at least one of:
a cell included in a cell set corresponding to the first downlink control information for scheduling the downlink transmission;
a cell included in a cell set corresponding to the first downlink control information for scheduling the uplink transmission; or
a cell included in a cell set corresponding to the first downlink control information for scheduling the uplink transmission and in a cell set corresponding to the first downlink control information for scheduling the uplink transmission.

In an embodiment, the at least one first cell is a cell included in a cell set corresponding to DCI 1_3, and the number of the at least one first cell is the number of cells in the cell set corresponding to DCI 1_3.

For example, the cell set corresponding to DCI 1_3 is a cell set composed of cells that may be scheduled by DCI 1_3. For example, the number of cells that may be scheduled by DCI 0_3 is 4, so the at least one first cell is these 4 cells, that is, the number of the at least one first cell is 4.

Taking the first number equal to 3 as an example, in the at least one first cell corresponding to DCI 1_3, a total number of a size of DCI 1_3 and one or more sizes of legacy DCIs aligned is less than or equal to the product of the number of at least one first cell 4 and the first number 3, that is, 12.

For example, the cell set corresponding to DCI 1_3 is a cell set composed of cells actually scheduled by DCI 1_3. For example, the number of cells that may be scheduled by DCI 1_3 is 3, so the at least one first cell is these 3 cells, that is, the number of the at least one first cell is 3.

Taking the first number equal to 3 as an example, in the at least one first cell corresponding to DCI 1_3, a total number of a size of DCI 1_3 and one or more sizes of legacy DCIs aligned is less than or equal to the product of the number 3 of at least one first cell and the first number 3, that is, 9.

In an embodiment, the at least one first cell is a cell included in a cell set corresponding to DCI 0_3, and the number of the at least one first cell is the number of cells in the cell set corresponding to DCI 0_3.

For example, the cell set corresponding to DCI 0_3 is a cell set composed of cells that may be scheduled by DCI 0_3. For example, the number of cells that may be scheduled by DCI 0_3 is 4, so the at least one first cell is these 4 cells, that is, the number of the at least one first cell is 4.

Taking the first number equal to 3 as an example, in the at least one first cell corresponding to DCI 0_3, a total number of a size of DCI 0_3 and one or more sizes of legacy DCIs aligned is less than or equal to the product of the number of at least one first cell 4 and the first number 3, that is, 12.

For example, the cell set corresponding to DCI 1_3 is a cell set composed of cells that may be scheduled by DCI 1_3. For example, the number of cells that may be scheduled by DCI 1_3 is 3, so the at least one first cell is these two cells, that is, the number of the at least one first cell is 3.

Taking the first number equal to 3 as an example, in the at least one first cell corresponding to DCI 1_3, a total number of a size of DCI 1_3 and one or more sizes of legacy DCIs aligned is less than or equal to the product of the number 3 of the at least one first cell and the first number 3, that is, 9.

In an embodiment, at least one first cell is a cell included in a cell set corresponding to DCI 0_3 and in a cell set corresponding to DCI 1_3, and the number of the at least one first cell is the number of cells in the cell set corresponding to DCI 0_3 and in the cell set corresponding to DCI 1_3, that is, the number of cells depends upon the union of the cell set corresponding to DCI 0_3 and the cell set corresponding to DCI 1_3.

For example, the cell set corresponding to DCI 0_3 is a cell set consisting of cells that may be scheduled by DCI 0_3, and the cell set corresponding to DCI 1_3 is a cell set consisting of cells that may be scheduled by DCI 1_3. The cells that may be scheduled by DCI 0_3 are Cell#1, Cell#2, Cell#3, and Cell#5, and the cells that may be scheduled by DCI 1_3 are Cell#1, Cell#2, Cell#4, and Cell#6. In this case, cells included in the cell set {Cell#1, Cell#2, Cell#3, and Cell#5} corresponding to DCI 0_3 and in the cell set {Cell#1, Cell#2, Cell#4, and Cell#6} corresponding to DCI 1_3 are Cell#1, Cell#2, Cell#3, Cell#4, Cell#5, and Cell#6, so the number of the at least one first cell is 6.

Taking the first number equal to 3 as an example, in the at least one first cell corresponding to DCI 0_3 and DCI 1_3, a total number of sizes of DCI 0_3 and DCI 1_3 and one or more sizes of aligned legacy DCIs is less than or equal to a product of the number 6 of the at least one first cell and the first number 3, that is, 18.

For example, the cell set corresponding to DCI 0_3 is a cell set consisting of cells actually scheduled by DCI 0_3, and the cell set corresponding to DCI 1_3 is a cell set consisting of cells actually scheduled by DCI 1_3. The cells actually scheduled by DCI 0_3 are Cell#1, Cell#2, and Cell#3, and the cells actually scheduled by DCI 1_3 are Cell#2 and Cell#4. In this case, cells included in the cell set { Cell#1, Cell#2, Cell#3} corresponding to DCI 0_3 and in the cell set {Cell#2, Cell#4} corresponding to DCI 1_3 are Cell#1, Cell#2, Cell#3, and Cell#4, so the number of the at least one first cell is 4.

Taking the first number equal to 3 as an example, in the at least one first cell corresponding to DCI 1_3, a total number of a size of DCI 1_3 and one or more sizes of aligned legacy DCI is less than or equal to a product of the number 3 of the at least one first cell and the first number 3, that is, 9.

Regarding which of the above embodiments is used to determine the at least one first cell, the terminal may determine it according to a predefined rule, or according to an instruction from the network device, or according to a capability reported by the terminal.

It should be noted that the cell set is not limited to the above two situations, that is, the cell set consisting of cells that may be scheduled by the MC-DCI and the cell set consisting of cells actually scheduled by the MC-DCI. The cell set is exemplarily described below with several embodiments.

In an embodiment, the cell set includes at least one of:
a cell set composed of the cells actually scheduled by the MC-DCI, where, for example, the cell set corresponding to DCI 0_3 is the cell set composed of the cells actually scheduled by DCI 0_3, and for another example, the cell set corresponding to DCI 1_3 is the cell set composed of the cells actually scheduled by DCI 1_3;
a cell set consisting of cells that may be scheduled by the MC-DCI, where, for example, the cell set corresponding to DCI 0_3 is the cell set consisting of the cells that may be scheduled by DCI 0_3, and for another example, the cell set corresponding to DCI 1_3 is the cell set consisting of the cells that may be scheduled by DCI 1_3;
a cell set consisting of cells having the same configuration parameter, where the configuration parameter include but is not limited to an identifier of a set, an identifier of a cell, a sequence number, and a carrier indicator field (CIF);
a cell set determined according to a signaling transmitted by the network device, where, for example, the cell set corresponding to DCI 0_3 is a cell set determined according to a signaling received by a cell actually scheduled by DCI 0_3, for example, a cell set corresponding to DCI 1_3 is a cell set determined according to a signaling received by a cell actually scheduled by DCI 1_3; or
a set of cells determined according to a predefined rule.

In an embodiment, in any cell of multiple cells scheduled by the first downlink control information for scheduling the downlink transmission, the number of the one or more sizes of the pieces of legacy downlink control information aligned is less than or equal to a third number; or
in any cell of multiple cells scheduled by the first downlink control information for scheduling the uplink transmission, the number of the one or more sizes of the pieces of legacy downlink control information aligned is less than or equal to a third number; or
in any cell of multiple cells scheduled by the first downlink control information for scheduling the uplink transmission and multiple cells scheduled by the first downlink control information for scheduling the uplink transmission, the number of the one or more sizes of the pieces of legacy downlink control information aligned is less than or equal to a third number.

In an embodiment, the third number is 2 or 3.

In an embodiment, the network device may adjust a configuration to enable the number of sizes of aligned legacy DCIs in any one of the multiple cells scheduled by DCI 0_3 to be less than or equal to the third number.

Accordingly, in any one of the multiple cells scheduled by DCI 0_3, the number of sizes of the aligned legacy DCIs is relatively small, so as to ensure that in at least one first cell corresponding to DCI 0_3, the total number of a size of DCI 0_3 and the sizes of the aligned legacy DCIs is less than or equal to the product of the number of the at least one first cell and the first number.

For example, the third number is 2. Although DCI 0_3 is introduced in the cell scheduled by DCI 0_3, it is still able to ensure that in the at least one first cell corresponding to DCI 0_3, the total number of the size of DCI 0_3 and the sizes of the aligned legacy DCIs is less than or equal to the product of the number of the at least one first cell and the first number.

For example, the number of at least one first cell corresponding to DCI 0_3 is 1, the first number is 3, and the product of the number of the at least one first cell and the first number is equal to 3. For example, the number of sizes of aligned legacy DCIs is equal to the third number 2, and the number of the size of DCI 0_3 is 1, then the total number of the size of DCI 0_3 and the sizes of the aligned legacy DCIs is 3, which is equal to the product of the number of the at least one first cell and the first number 3.

In an embodiment, the network device may adjust a configuration to enable the number of sizes of aligned legacy DCIs in any one of the multiple cells scheduled by DCI 1_3 to be less than or equal to the third number.

Accordingly, in any one of the multiple cells scheduled by DCI 1_3, the number of sizes of the aligned legacy DCIs is relatively small, so as to ensure that in at least one first cell corresponding to DCI 1_3, the total number of a size of DCI 1_3 and the sizes of the aligned legacy DCIs is less than or equal to the product of the number of the at least one first cell and the first number.

For example, the third number is 3. Although DCI 1_3 is introduced in the cell scheduled by DCI 1_3, it is still able to ensure that in the at least one first cell corresponding to DCI 1_3, a total number of the size of DCI 1_3 and one or more sizes of the aligned legacy DCIs is less than or equal to the product of the number of the at least one first cell and the first number.

For example, the number of at least one first cell corresponding to DCI 1_3 is 1, the first number is 4, and the product of the number of the at least one first cell and the first number is equal to 4. For example, the number of sizes of aligned legacy DCIs is equal to the third number 3, and the number of the size of DCI 1_3 is 1, then the total number of the size of DCI 1_3 and the sizes of the aligned legacy DCIs is 3, which is less than the product of the number of the at least one first cell and the first number 3.

In an embodiment, the network device may adjust a configuration to enable the number of sizes of aligned legacy DCIs in any cell of the multiple cells scheduled by DCI 0_3 and the multiple cells scheduled by DCI 1_3 to be less than or equal to the third number.

Accordingly, in any cell of the multiple cells scheduled by DCI 0_3 and the multiple cells scheduled by DCI 1_3, the number of sizes of aligned legacy DCIs is relatively small, so as to ensure that in at least one first cell of the multiple cells corresponding to DCI 0_3 and in at least one first cell of the multiple cells corresponding to DCI 1_3, a total number of sizes of DCI 0_3 and DCI 1_3 and the sizes of the aligned legacy DCIs is less than or equal to the product of the number of the at least one first cell and the first number.

For example, the third number is 2. Although DCI 0_3 is introduced in the cell scheduled by DCI 0_3, and DCI 1_3 is introduced in the cell scheduled by DCI 1_3, it is still able to ensure that in at least one first cell corresponding to DCI 1_3 and DCI 1_3, the total number of the sizes of DCI 1_3 and DCI 1_3, and the sizes of the aligned legacy DCIs is less than or equal to the product of the number of the at least one first cell and the first number.

For example, the number of the at least one first cell corresponding to DCI 0_3 and DCI 1_3 is 1, the first number is 4, and the product of the number of at least one first cell and the first number is equal to 4. For example, the number of sizes of aligned legacy DCIs is equal to the third number 2, the number of sizes of DCI 0_3 and DCI 1_3 is 2, then the total number of the sizes of DCI 0_3 and DCI 1_3 and the sizes of the aligned legacy DCIs is 4, which is equal to the product 4 of the number of the at least one first cell and the first number.

FIG. 7 is a schematic flow chart of a method for performing a downlink control information size alignment according to an embodiment of the present disclosure. The method for performing the downlink control information size alignment according to this embodiment may be executed by a network device, and the network device may communicate with a terminal. The network device includes but is not limited to a base station in a communication system such as a 4G base station, a 5G base station, and a 6G base station. The terminal includes but is not limited to a mobile phone, a tablet computer, a wearable device, a sensor an Internet of Things device, and other communication devices.

As shown in FIG. 7, the method for performing the downlink control information size alignment may include the following steps.

In step S701, a reference cell is determined among at least one first cell corresponding to first downlink control information for scheduling multiple cells.

In step S702, a size alignment on pieces of legacy downlink control information and the first downlink control information in the reference cell is determined, and a size alignment on pieces of legacy downlink control information in a second cell among the at least one first cell is determined, where the second cell is a cell other than the reference cell among the at least one first cell.

In step S703, the first downlink control information is transmitted to the terminal.

For the sake of simplicity in description in the subsequent embodiments, the first downlink control information is referred to as MC-DCI, and the legacy downlink control information is referred to as legacy DCI.

In an embodiment, the legacy DCI may also be referred to as existing DCI, and the legacy DCI includes at least one of: DCI 0_0, DCI 0_1, DCI 1_0, DCI 1_1, DCI 2_0, or DCI 2_1. The DCI size alignment process may refer to the prior art, which will not be described in the present disclosure.

According to embodiments of the present disclosure, the network device may determine the reference cell among at least one first cell corresponding to the MC-DCI. The size alignment is performed on DCIs in the reference cell, and the DCIs participating in the alignment process include the MC-DCI and the legacy DCIs. The size alignment is performed on DCIs in the cell other than the reference cell among the at least one first cell, and the DCIs participating in the alignment process include the legacy DCIs, but do not include the MC-DCI. The DCI may be transmitted to the terminal.

According to embodiments of the present disclosure, after receiving the MC-DCI for scheduling multiple cells, the terminal may determine at least one first cell corresponding to the MC-DCI, and may determine that the legacy DCIs and the MC-DCI participate in the DCI size alignment process in the reference cell, and that only the legacy DCIs participate in the DCI size alignment process in the cell other than the reference cell among the at least one first cell.

Since only the legacy DCIs in the cell other than the reference cell among the at least one first cell participate in the DCI size alignment process, and the MC-DCI does not participate in the alignment process, it is helpful to simplify deduction alignment process by the terminal. Furthermore, both the legacy DCIs and the MC-DCI in the reference cell among the at least one first cell participate in the alignment process, which is helpful to ensure that the total number of sizes of DCIs in the at least one first cell will not be too large, thereby avoiding excessive complexity of DCI blind detection by the terminal.

Moreover, since in the cells other than the reference cell, the size alignment is performed on only the legacy DCIs, but is not performed on the MC-DCI, the size of the MC-DCI remains unchanged across different cells, thereby avoiding a problem that MC-DCIs with different sizes need to be transmitted in different cells among the cells other than the reference cell when the above network device schedules multiple cells with one MC-DCI.

It should be noted that the DCI size alignment operation is performed by the network device. After performing the alignment operation, the network device transmits the DCI to the terminal. The terminal determines the size alignment of one or more DCIs by deducing the alignment process of the network device on the one or more DCIs, such as deducing the alignment process of the network device such as zero padding or truncation on the DCI, thereby determining the one or more sizes of the aligned DCIs for DCI blind detection. The terminal does not perform the alignment operation such as zero padding or truncation on the DCI.

In an embodiment, the pieces of legacy downlink control information in each cell scheduled by the first downlink control information satisfy a preset condition, and the preset condition includes:
the number of sizes of the pieces of legacy downlink control information scrambled by a cell radio network temporary identifier (C-RNTI) is less than or equal to a first number; and
the number of sizes of the pieces of legacy downlink control information scrambled by a radio network temporary identifier (RNTI) other than the C-RNTI is less than or equal to a second number.

In an embodiment, the first number is 3 or 4, and the second number is 1. For example, in a case that the first number is 3 and the second number is 1, the preset condition may be referred to as a "3+1" condition. That is, in one cell, the number of sizes of the legacy DCIs scrambled by the C-RNTI is less than or equal to 3, and the number of sizes of the legacy DCIs scrambled by the RNTI other than the C-RNTI is less than or equal to 1. Alternatively, it may also be expressed as, in one cell, the number of the sizes of the legacy DCIs is less than or equal to 4, where the number of the sizes of the legacy DCIs scrambled by the C-RNTI is less than or equal to 3.

The at least one first cell corresponding to the MC-DCI is exemplarily described below with several embodiments.

In an embodiment, the first downlink control information includes at least one of:
first downlink control information for scheduling a downlink transmission, such as DCI 1_3; or
first downlink control information for scheduling an uplink transmission, such as DCI 0_3.

For the convenience of illustration below, DCI 1_3 refers to the first downlink control information for scheduling the downlink transmission, and DCI 0_3 refers to the first downlink control information for scheduling the uplink transmission.

In an embodiment, the at least one cell includes at least one of:
a cell included in a cell set corresponding to the first downlink control information for scheduling the downlink transmission;
a cell included in a cell set corresponding to the first downlink control information for scheduling the uplink transmission; or
a cell included in a cell set corresponding to the first downlink control information for scheduling the uplink transmission and in a cell set corresponding to the first downlink control information for scheduling the uplink transmission.

In an embodiment, the at least one first cell is a cell included in a cell set corresponding to DCI 1_3. For example, the cell set corresponding to DCI 1_3 is a cell set consisting of cells that may be scheduled by DCI 1_3, or the cell set corresponding to DCI 1_3 is a cell set consisting of cells actually scheduled by DCI 1_3.

In an embodiment, the at least one first cell is a cell included in a cell set corresponding to DCI 0_3. For example, the cell set corresponding to DCI 0_3 is a cell set consisting of cells that may be scheduled by DCI 0_3, or the cell set corresponding to DCI 1_3 is a cell set consisting of cells actually scheduled by DCI 0_3.

In an embodiment, the at least one first cell is a cell included in a cell set corresponding to DCI 0_3 and in a cell set corresponding to DCI 1_3.

For example, the cell set corresponding to DCI 0_3 is a cell set consisting of cells that may be scheduled by DCI 0_3, and the cell set corresponding to DCI 1_3 is a cell set consisting of cells that may be scheduled by DCI 1_3. The cells that may be scheduled by DCI 0_3 are Cell#1, Cell#2, Cell#3, and Cell#5, and the cells that may be scheduled by DCI 1_3 are Cell#1, Cell#2, Cell#4, and Cell#6. In this case, cells included in the cell set {Cell#1, Cell#2, Cell#3, and Cell#5} corresponding to DCI 0_3 and in the cell set {Cell#1, Cell#2, Cell#4, and Cell#6} corresponding to DCI 1_3 are Cell#1, Cell#2, Cell#3, Cell#4, Cell#5, and Cell#6.

For example, the cell set corresponding to DCI 0_3 is a cell set consisting of cells actually scheduled by DCI 0_3, and the cell set corresponding to DCI 1_3 is a cell set consisting of cells actually scheduled by DCI 1_3. The cells actually scheduled by DCI 0_3 are Cell#1, Cell#2, and Cell#3, and the cells actually scheduled by DCI 1_3 are Cell#2 and Cell#4. In this case, cells included in the cell set { Cell#1, Cell#2, Cell#3} corresponding to DCI 0_3 and in the cell set {Cell#2, Cell#4} corresponding to DCI 1_3 are Cell#1, Cell#2, Cell#3, and Cell#4.

Regarding which of the above embodiments is used to determine the at least one first cell, the terminal may determine it according to a predefined rule, or according to an instruction from the network device, or according to a terminal capability reported by the terminal.

It should be noted that the cell set is not limited to the above two cases, that is, the cell set consisting of the cells that may be scheduled by the MC-DCI and the cell set consisting of the cells actually scheduled by the MC-DCI. The cell set is exemplarily described below with several embodiments.

In an embodiment, the cell set includes at least one of:
a cell set composed of the cells actually scheduled by the MC-DCI, where, for example, the cell set corresponding to DCI 0_3 is the cell set composed of the cells actually scheduled by DCI 0_3, and for another example, the cell set corresponding to DCI 1_3 is the cell set composed of the cells actually scheduled by DCI 1_3;
a cell set consisting of cells that may be scheduled by the MC-DCI, where, for example, the cell set corresponding to DCI 0_3 is the cell set consisting of the cells that may be scheduled by DCI 0_3, and for another example, the cell set corresponding to DCI 1_3 is the cell set consisting of the cells that may be scheduled by DCI 1_3;
a cell set consisting of cells having the same configuration parameter, where the configuration parameter include but is not limited to an identifier of a set, an identifier of a cell, a sequence number, and a carrier indicator field (CIF);
a cell set determined according to a signaling transmitted by the network device, where, for example, the cell set corresponding to DCI 0_3 is a cell set determined according to a signaling received by a cell actually scheduled by DCI 0_3, for example, a cell set corresponding to DCI 1_3 is a cell set determined according to a signaling received by a cell actually scheduled by DCI 1_3; or
a set of cells determined according to a predefined rule.

In an embodiment, the reference cell includes at least one of:
a cell with a smallest cell index among the at least one first cell;
a cell with a largest cell index among the at least one first cell;
a cell with a smallest number of sizes of pieces of legacy downlink control information configured among the at least one first cell;
a cell for calculating a blind detection resource (e.g., BD and CCE) among the at least one first cell; or
a cell configured with a search space corresponding to the first downlink control information among the at least one first cell.

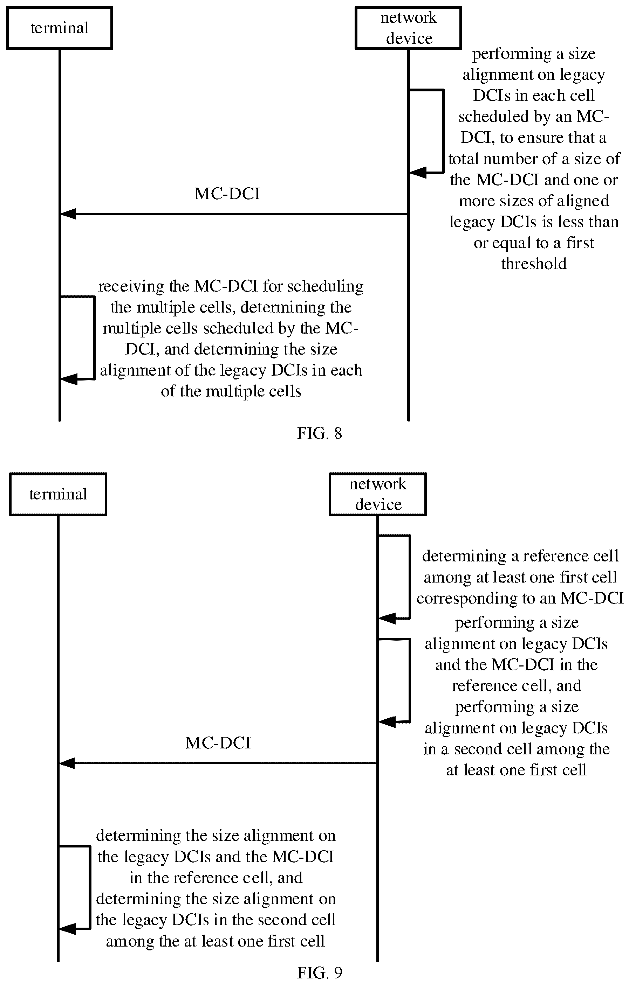

FIG. 8 is a schematic diagram showing interaction between a terminal and a network device according to an embodiment of the present disclosure.

As shown in FIG. 8, the network device may perform a size alignment on legacy DCIs in each cell scheduled by an MC-DCI, to ensure that a total number of a size of the MC-DCI and one or more sizes of aligned legacy DCIs is less than or equal to a first threshold, and then may transmit the MC-DCI and the aligned legacy DCIs to the terminal.

The terminal may receive the MC-DCI for scheduling the multiple cells, may determine the multiple cells scheduled by the MC-DCI, and may determine the size alignment of the legacy DCIs in each of the multiple cells.

It should be noted that for other contents involved in this embodiment, please refer to the description of the relevant contents in the above embodiments, which will not be repeated here.

FIG. 9 is a schematic diagram showing another interaction between a terminal and a network device according to an embodiment of the present disclosure.

As shown in FIG. 9, the network device may determine a reference cell among at least one first cell corresponding to an MC-DCI. A size alignment is performed on DCIs in the reference cell, and the DCIs involved in the alignment process include the MC-DCI and legacy DCIs. A size alignment is performed on pieces of legacy downlink control information in a second cell among the at least one first cell, and the DCIs involved in the alignment process include legacy DCIs, but do not include the MC-DCI. Then, the DCI may be transmitted to the terminal.

The terminal may receive the MC-DCI for scheduling multiple cells, may determine at least one first cell corresponding to the MC-DCI, and may determine that the legacy DCIs and the MC-DCI participate in the DCI size alignment process in the reference cell, and that only the legacy DCIs participate in the DCI size alignment process in the cell other than the reference cell among the at least one first cell.

It should be noted that for other contents involved in this embodiment, please refer to the description of the relevant contents in the above embodiments, which will not be repeated here.

Corresponding to the aforementioned embodiments of the method for performing the downlink control information size alignment and the method for determining the downlink control information size alignment, the present disclosure further provides embodiments of an apparatus for performing a downlink control information size alignment and an apparatus for determining a downlink control information size alignment.

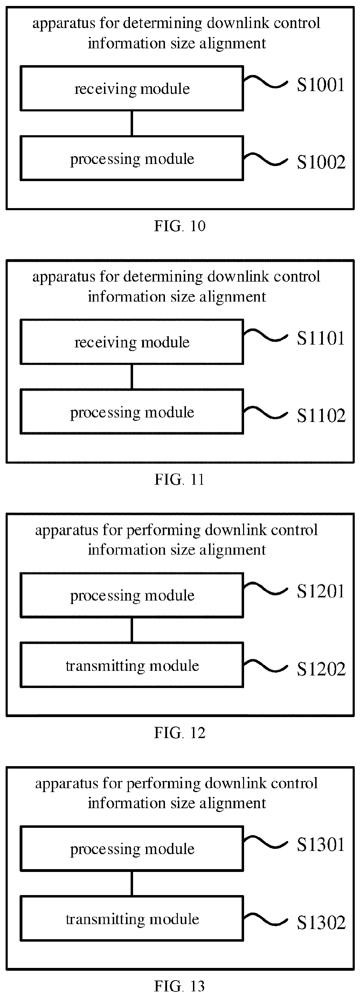

FIG. 10 is a schematic block diagram of an apparatus for determining a downlink control information size alignment according to an embodiment of the present disclosure. As shown in FIG. 10, the apparatus for determining the downlink control information size alignment includes:
a receiving module 1001, configured to receive first downlink control information for scheduling a plurality of cells; and
a processing module 1002, configured to determine a size alignment on pieces of legacy downlink control information in each cell scheduled by the first downlink control information, where in at least one first cell corresponding to the first downlink control information, a total number of a size of the first downlink control information and one or more sizes of the pieces of legacy downlink control information aligned is less than or equal to a first threshold.

In an embodiment, the at least one first cell is any cell of the plurality of cells scheduled by the first downlink control information.

In an embodiment, the first downlink control information includes at least one of: first downlink control information for scheduling a downlink transmission; or first downlink control information for scheduling an uplink transmission.

In an embodiment, the at least one first cell includes at least one of:
a cell included in a cell set corresponding to the first downlink control information for scheduling the downlink transmission;
a cell included in a cell set corresponding to the first downlink control information for scheduling the uplink transmission; or
a cell included in a cell set corresponding to the first downlink control information for scheduling the uplink transmission and in a cell set corresponding to the first downlink control information for scheduling the uplink transmission.

In an embodiment, in any cell of a plurality of cells scheduled by the first downlink control information for scheduling the downlink transmission, the number of the one or more sizes of the pieces of legacy downlink control information aligned is less than or equal to a third number; or in any cell of a plurality of cells scheduled by the first downlink control information for scheduling the uplink transmission, the number of the one or more sizes of the pieces of legacy downlink control information aligned is less than or equal to a third number; or in any cell of a plurality of cells scheduled by the first downlink control information for scheduling the downlink transmission and of a plurality of cells scheduled by the first downlink control information for scheduling the uplink transmission, the number of the one or more sizes of the pieces of legacy downlink control information aligned is less than or equal to a third number.

In an embodiment, the third number is 2 or 3.

In an embodiment, the pieces of legacy downlink control information in each cell scheduled by the first downlink control information satisfy a preset condition, and the preset condition includes: the number of sizes of the pieces of legacy downlink control information scrambled by a cell radio network temporary identifier (C-RNTI) is less than or equal to a first number; and the number of sizes of the pieces of legacy downlink control information scrambled by a radio network temporary identifier (RNTI) other than the C-RNTI is less than or equal to a second number.

In an embodiment, the first number is 3 or 4, and the second number is 1.

FIG. 11 is a schematic block diagram of an apparatus for determining a downlink control information size alignment according to an embodiment of the present disclosure. As shown in FIG. 11, the apparatus for determining the downlink control information size alignment includes:
a receiving module 1101, configured to receive first downlink control information for scheduling a plurality of cells; and
a processing module 1102, configured to determine a reference cell among at least one first cell corresponding to the first downlink control information, determine a size alignment on pieces of legacy downlink control information and the first downlink control information in the reference cell, and determine a size alignment on pieces of legacy downlink control information in a second cell among the at least one first cell, where the second cell is a cell other than the reference cell among the at least one first cell.

In an embodiment, the first downlink control information includes at least one of: first downlink control information for scheduling a downlink transmission; or first downlink control information for scheduling an uplink transmission.

In an embodiment, the at least one first cell includes at least one of:
a cell included in a cell set corresponding to the first downlink control information for scheduling the downlink transmission;
a cell included in a cell set corresponding to the first downlink control information for scheduling the uplink transmission; or
a cell included in a cell set corresponding to the first downlink control information for scheduling the uplink transmission and in a cell set corresponding to the first downlink control information for scheduling the uplink transmission.

In an embodiment, the reference cell includes at least one of:
a cell with a smallest cell index among the at least one first cell;
a cell with a largest cell index among the at least one first cell;
a cell with a smallest number of sizes of pieces of legacy downlink control information configured among the at least one first cell;
a cell for calculating a blind detection resource among the at least one first cell; or
a cell configured with a search space corresponding to the first downlink control information among the at least one first cell.

In an embodiment, the pieces of legacy downlink control information in each cell scheduled by the first downlink control information satisfy a preset condition, and the preset condition includes: the number of sizes of the pieces of legacy downlink control information scrambled by a cell radio network temporary identifier (C-RNTI) is less than or equal to a first number; and the number of sizes of the pieces of legacy downlink control information scrambled by an RNTI other than the C-RNTI is less than or equal to a second number.

In an embodiment, the first number is 3 or 4, and the second number is 1.

FIG. 12 is a schematic block diagram of an apparatus for performing a downlink control information size alignment according to an embodiment of the present disclosure. As shown in FIG. 12, the apparatus for performing the downlink control information size alignment includes:
a processing module 1201, configured to perform a size alignment on pieces of legacy downlink control information in each cell scheduled by first downlink control information for scheduling a plurality of cells, where in at least one first cell corresponding to the first downlink control information, a total number of a size of the first downlink control information and one or more sizes of the pieces of legacy downlink control information aligned is less than or equal to a first threshold; and
a transmitting module 1202, configured to transmit the first downlink control information to a terminal.

In an embodiment, the at least one first cell is any cell of the plurality of cells scheduled by the first downlink control information.

In an embodiment, the first downlink control information includes at least one of: first downlink control information for scheduling a downlink transmission; or first downlink control information for scheduling an uplink transmission.

In an embodiment, the at least one first cell includes at least one of:
a cell included in a cell set corresponding to the first downlink control information for scheduling the downlink transmission;
a cell included in a cell set corresponding to the first downlink control information for scheduling the uplink transmission; or
a cell included in a cell set corresponding to the first downlink control information for scheduling the uplink transmission and in a cell set corresponding to the first downlink control information for scheduling the uplink transmission.

In an embodiment, in any cell of a plurality of cells scheduled by the first downlink control information for scheduling the downlink transmission, the number of the one or more sizes of the pieces of legacy downlink control information aligned is less than or equal to a third number; or in any cell of a plurality of cells scheduled by the first downlink control information for scheduling the uplink transmission, the number of the one or more sizes of the pieces of legacy downlink control information aligned is less than or equal to a third number; or in any cell of a plurality of cells scheduled by the first downlink control information for scheduling the downlink transmission and of a plurality of cells scheduled by the first downlink control information for scheduling the uplink transmission, the number of the one or more sizes of the pieces of legacy downlink control information aligned is less than or equal to a third number.

In an embodiment, the third number is 2 or 3.

In an embodiment, the pieces of legacy downlink control information in each cell scheduled by the first downlink control information satisfy a preset condition, and the preset condition includes: the number of sizes of the pieces of legacy downlink control information scrambled by a cell radio network temporary identifier (C-RNTI) is less than or equal to a first number; and the number of sizes of the pieces of legacy downlink control information scrambled by an RNTI other than the C-RNTI is less than or equal to a second number.

In an embodiment, the first number is 3 or 4, and the second number is 1.

FIG. 13 is a schematic block diagram of an apparatus for performing a downlink control information size alignment according to an embodiment of the present disclosure. As shown in FIG. 13, the apparatus for performing the downlink control information size alignment includes:
a processing module 1301, configured to determine a reference cell among at least one first cell corresponding to first downlink control information for scheduling a plurality of cells, perform a size alignment on pieces of legacy downlink control information and the first downlink control information in the reference cell, and perform a size alignment on pieces of legacy downlink control information in a second cell among the at least one first cell, where the second cell is a cell other than the reference cell among the at least one first cell; and
a transmitting module 1302, configured to transmit the first downlink control information to a terminal.

In an embodiment, the first downlink control information includes at least one of: first downlink control information for scheduling a downlink transmission; or first downlink control information for scheduling an uplink transmission.

In an embodiment, the at least one first cell includes at least one of:
a cell included in a cell set corresponding to the first downlink control information for scheduling the downlink transmission;
a cell included in a cell set corresponding to the first downlink control information for scheduling the uplink transmission; or
a cell included in a cell set corresponding to the first downlink control information for scheduling the uplink transmission and in a cell set corresponding to the first downlink control information for scheduling the uplink transmission.

In an embodiment, the reference cell includes at least one of:
a cell with a smallest cell index among the at least one first cell;
a cell with a largest cell index among the at least one first cell;
a cell with a smallest number of sizes of pieces of legacy downlink control information configured among the at least one first cell;
a cell for calculating a blind detection resource among the at least one first cell; or
a cell configured with a search space corresponding to the first downlink control information among the at least one first cell.

In an embodiment, the pieces of legacy downlink control information in each cell scheduled by the first downlink control information satisfy a preset condition, and the preset condition includes: the number of sizes of the pieces of legacy downlink control information scrambled by a cell radio network temporary identifier (C-RNTI) is less than or equal to a first number; and the number of sizes of the pieces of legacy downlink control information scrambled by an RNTI other than the C-RNTI is less than or equal to a second number.

In an embodiment, the first number is 3 or 4, and the second number is 1.

For the apparatus embodiments, since they basically correspond to the method embodiments, reference may be made to the relevant parts of the description of the method embodiments. The apparatus embodiments described above are just for example, the modules described as separate components may or may not be physically separated, and the components shown as units may or may not be physical units, that is, they may be located in one place, or may be distributed to multiple network units. Part or all of the modules may be selected according to actual needs to achieve the purpose of the solution of the embodiments of the present disclosure. Those ordinary skills in the art may understand and implement it without creative effort.

An embodiment of the present disclosure further provides a system for a downlink control information size alignment, including a terminal and a network device network device. The terminal is configured to implement the method for determining the downlink control information size alignment according to any of the above embodiments, and the network device is configured to implement the method for performing the downlink control information size alignment according to any of the above embodiments.

An embodiment of the present disclosure further provides a communication device, including: a processor; and a memory for storing a computer program. When the computer program is executed by the processor, the method for determining the downlink control information size alignment according to any of the above embodiments is implemented.

An embodiment of the present disclosure further provides a communication device, including: a processor; and a memory for storing a computer program. When the computer program is executed by the processor, the method for performing the downlink control information size alignment according to any of the above embodiments is implemented.

An embodiment of the present disclosure further provides a computer-readable storage medium configured to store a computer program. The computer program, when executed by a processor, causes the method for determining the downlink control information size alignment according to any of the above embodiments to be implemented.

An embodiment of the present disclosure further proposes a computer-readable storage medium configured to store a computer program. The computer program, when executed by a processor, causes the method for performing the downlink control information size alignment according to any of the above embodiments to be implemented.

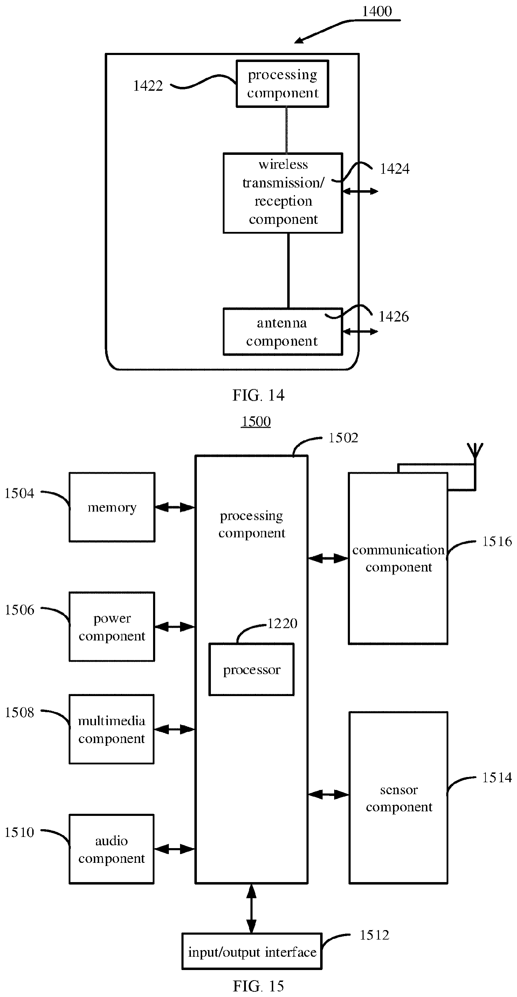

As shown in FIG. 14, FIG. 14 is a schematic block diagram of an apparatus 1400 for performing the downlink control information size alignment according to an embodiment of the present disclosure. The apparatus 1400 may be a base station. Referring to FIG. 14, the apparatus 1400 includes a processing component 1422, a wireless transmission/reception component 1424, an antenna component 1426, and a signal processing part specific to a radio interface. The processing component 1422 may further include one or more processors. One of the processors in the processing component 1422 may be configured to implement the method for performing the downlink control information size alignment described in any of the above embodiments.

FIG. 15 is a schematic block diagram of an apparatus 1500 for determining the downlink control information size alignment according to an embodiment of the present disclosure. For example, the apparatus 1500 may be a terminal, such as a mobile phone, a computer, a digital broadcast terminal, a messaging device, a game console, a tablet device, a medical device, a fitness device, a personal digital assistant, etc.

Referring to FIG. 15, the apparatus 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 generally controls the overall operations of the apparatus 1500, such as operations associated with display, phone calls, data communications, camera operations, and recording operations. The processing component 1502 may include one or more processors 1520 to execute instructions to implement all or part of steps of the method for determining the downlink control information size alignment described in any of the above embodiments. In addition, the processing component 1502 may include one or more modules to facilitate the interaction between the processing component 1502 and other components. For example, the processing component 1502 may include a multimedia module to facilitate the interaction between the multimedia component 1508 and the processing component 1502.

The memory 1504 is configured to store various types of data to support operations on the apparatus 1500. Examples of such data include instructions for any application or method operating on the apparatus 1500, contact data, phonebook data, messages, pictures, videos, and the like.

The power supply component 1506 provides power to the various components of the apparatus 1500. The power supply component 1506 may include a power management system, one or more power supplies, and other components associated with generating, managing, and distributing power for the apparatus 1500.

The multimedia component 1508 includes a screen that provides an output interface between the apparatus 1500 and the user. In some embodiments, the screen may include a liquid crystal display (LCD) and a touch panel (TP). If the screen includes a touch panel, the screen may be implemented as a touch screen to receive input signals from the user.

The audio component 1510 is configured to output and/or input audio signals. For example, the audio component 1510 includes a microphone (MIC), and when the apparatus 1500 is in an operation mode, such as a call mode, a recording mode, and a speech recognition mode, the microphone is configured to receive an external audio signal. The received audio signal may be further stored in the memory 1504 or transmitted via the communication component 1516. In some embodiments, the audio component 1510 also includes a speaker for outputting audio signals.

The I/O interface 1512 provides an interface between the processing component 1502 and peripheral interface modules, such as keyboards, click wheels, buttons, etc. These buttons may include, but not limited to, a home button, a volume button, a start button, and a lock button.

The sensor assembly 1514 includes one or more sensors for providing status assessment of various aspects for the apparatus 1500.

The communication component 1516 is configured to facilitate wired or wireless communication between the apparatus 1500 and other devices. The apparatus 1500 may access a wireless network based on a communication standard, such as WiFi, 2G, 3G, 4G LTE, 5G NR, or a combination thereof. In an exemplary embodiment, the communication component 1516 receives a broadcast signal or broadcast-related information from an external broadcast management system via a broadcast channel. In an exemplary embodiment, the communication component 1516 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an exemplary embodiment, the apparatus 1500 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to execute the method for determining the downlink control information size alignment described in any of the above embodiments.

In an exemplary embodiment, a non-transitory computer-readable storage medium including instructions is further provided, such as a memory 1504 including instructions, and the instructions may be executed by the processor 1520 of the apparatus 1500 to execute the method for determining the downlink control information size alignment described in any of the above embodiments. For example, the non-transitory computer-readable storage medium may be a ROM, a random access memory (RAM), a CD-ROM, a magnetic tape, a floppy disk, an optical data storage device, etc.

Those skilled in the art will readily appreciate other embodiments of the present disclosure after considering the specification and practicing the disclosure disclosed herein. The present disclosure is intended to cover any variations, uses, or adaptations of the present disclosure that follow the general principles of the present disclosure and include common knowledge or customary techniques in the art that are not disclosed in the present disclosure. The description and examples are to be regarded as exemplary only, and the true scope and spirit of the present disclosure are indicated by the appended claims.

It should be understood that the present disclosure is not limited to the exact structures that have been described above and shown in the drawings, and that various modifications and changes may be made without departing from the scope of the present disclosure. The scope of the present disclosure is defined only by the appended claims.

## Claims

1. A method for determining a downlink control information size alignment, performed by a terminal, comprising:
receiving first downlink control information for scheduling a plurality of cells; and
determining a size alignment on pieces of legacy downlink control information in each cell scheduled by the first downlink control information, wherein in at least one first cell corresponding to the first downlink control information, a total number of a size of the first downlink control information and one or more sizes of the pieces of legacy downlink control information aligned is less than or equal to a first threshold.

2. The method according to claim 1, wherein the at least one first cell is any cell of the plurality of cells scheduled by the first downlink control information.

3. The method according to claim 1, wherein the first downlink control information comprises at least one of:
first downlink control information for scheduling a downlink transmission; or
first downlink control information for scheduling an uplink transmission.

4. The method according to claim 3, wherein the at least one first cell comprises at least one of:
a cell comprised in a cell set corresponding to the first downlink control information for scheduling the downlink transmission;
a cell comprised in a cell set corresponding to the first downlink control information for scheduling the uplink transmission; or
a cell comprised in a cell set corresponding to the first downlink control information for scheduling the uplink transmission and in a cell set corresponding to the first downlink control information for scheduling the uplink transmission.

5. The method according to claim 3, wherein in any cell of a plurality of cells scheduled by the first downlink control information for scheduling the downlink transmission, the number of the one or more sizes of the pieces of legacy downlink control information aligned is less than or equal to a third number; or
in any cell of a plurality of cells scheduled by the first downlink control information for scheduling the uplink transmission, the number of the one or more sizes of the pieces of legacy downlink control information aligned is less than or equal to a third number; or
in any cell of a plurality of cells scheduled by the first downlink control information for scheduling the uplink transmission and of a plurality of cells scheduled by the first downlink control information for scheduling the uplink transmission, the number of the one or more sizes of the pieces of legacy downlink control information aligned is less than or equal to a third number.

6. The method according to claim 5, wherein the third number is 2 or 3.

7. The method according to any one of claims 1 to 6, wherein the pieces of legacy downlink control information in each cell scheduled by the first downlink control information satisfy a preset condition, and the preset condition comprises:
the number of sizes of the pieces of legacy downlink control information scrambled by a cell radio network temporary identifier (C-RNTI) is less than or equal to a first number; and
the number of sizes of the pieces of legacy downlink control information scrambled by a radio network temporary identifier (RNTI) other than the C-RNTI is less than or equal to a second number.

8. The method according to claim 7, wherein the first number is 3 or 4, and the second number is 1.

9. A method for determining a downlink control information size alignment, performed by a terminal, comprising:
receiving first downlink control information for scheduling a plurality of cells;
determining a reference cell among at least one first cell corresponding to the first downlink control information; and
determining a size alignment on pieces of legacy downlink control information and the first downlink control information in the reference cell, and determining a size alignment on pieces of legacy downlink control information in a second cell among the at least one first cell, wherein the second cell is a cell other than the reference cell among the at least one first cell.

10. The method according to claim 9, wherein the first downlink control information comprises at least one of:
first downlink control information for scheduling a downlink transmission; or
first downlink control information for scheduling an uplink transmission.

11. The method according to claim 10, wherein the at least one first cell comprises at least one of:
a cell comprised in a cell set corresponding to the first downlink control information for scheduling the downlink transmission;
a cell comprised in a cell set corresponding to the first downlink control information for scheduling the uplink transmission; or
a cell comprised in a cell set corresponding to the first downlink control information for scheduling the uplink transmission and in a cell set corresponding to the first downlink control information for scheduling the uplink transmission.

12. The method according to any one of claims 9 to 11, wherein the reference cell comprises at least one of:
a cell with a smallest cell index among the at least one first cell;
a cell with a largest cell index among the at least one first cell;
a cell with a smallest number of sizes of pieces of legacy downlink control information configured among the at least one first cell;
a cell for calculating a blind detection resource among the at least one first cell; or
a cell configured with a search space corresponding to the first downlink control information among the at least one first cell.

13. The method according to any one of claims 9 to 12, wherein the pieces of legacy downlink control information in each cell scheduled by the first downlink control information satisfy a preset condition, and the preset condition comprises:
the number of sizes of the pieces of legacy downlink control information scrambled by a cell radio network temporary identifier (C-RNTI) is less than or equal to a first number; and
the number of sizes of the pieces of legacy downlink control information scrambled by an RNTI other than the C-RNTI is less than or equal to a second number.

14. The method according to claim 13, wherein the first number is 3 or 4, and the second number is 1.

15. A method for performing a downlink control information size alignment, performed by a network device, comprising:
performing a size alignment on pieces of legacy downlink control information in each cell scheduled by first downlink control information for scheduling a plurality of cells, wherein in at least one first cell corresponding to the first downlink control information, a total number of a size of the first downlink control information and one or more sizes of the pieces of legacy downlink control information aligned is less than or equal to a first threshold; and
transmitting the first downlink control information to a terminal.

16. The method according to claim 15, wherein the at least one first cell is any cell of the plurality of cells scheduled by the first downlink control information.

17. The method according to claim 15, wherein the first downlink control information comprises at least one of:
first downlink control information for scheduling a downlink transmission; or
first downlink control information for scheduling an uplink transmission.

18. The method according to claim 17, wherein the at least one first cell comprises at least one of:
a cell comprised in a cell set corresponding to the first downlink control information for scheduling the downlink transmission;
a cell comprised in a cell set corresponding to the first downlink control information for scheduling the uplink transmission; or
a cell comprised in a cell set corresponding to the first downlink control information for scheduling the uplink transmission and in a cell set corresponding to the first downlink control information for scheduling the uplink transmission.

19. The method according to claim 17, wherein in any cell of a plurality of cells scheduled by the first downlink control information for scheduling the downlink transmission, the number of the one or more sizes of the pieces of legacy downlink control information aligned is less than or equal to a third number; or
in any cell of a plurality of cells scheduled by the first downlink control information for scheduling the uplink transmission, the number of the one or more sizes of the pieces of legacy downlink control information aligned is less than or equal to a third number; or
in any cell of a plurality of cells scheduled by the first downlink control information for scheduling the uplink transmission and of a plurality of cells scheduled by the first downlink control information for scheduling the uplink transmission, the number of the one or more sizes of the pieces of legacy downlink control information aligned is less than or equal to a third number.

20. The method according to claim 19, wherein the third number is 2 or 3.

21. The method according to any one of claims 15 to 20, wherein the pieces of legacy downlink control information in each cell scheduled by the first downlink control information satisfy a preset condition, and the preset condition comprises:
the number of sizes of the pieces of legacy downlink control information scrambled by a cell radio network temporary identifier (C-RNTI) is less than or equal to a first number; and
the number of sizes of the pieces of legacy downlink control information scrambled by an RNTI other than the C-RNTI is less than or equal to a second number.

22. The method according to claim 21, wherein the first number is 3 or 4, and the second number is 1.

23. A method for performing a downlink control information size alignment, performed by a network device, comprising:
determining a reference cell among at least one first cell corresponding to first downlink control information for scheduling a plurality of cells;
performing a size alignment on pieces of legacy downlink control information and the first downlink control information in the reference cell, and performing a size alignment on pieces of legacy downlink control information in a second cell among the at least one first cell, wherein the second cell is a cell other than the reference cell among the at least one first cell; and
transmitting the first downlink control information to a terminal.

24. The method according to claim 23, wherein the first downlink control information comprises at least one of:
first downlink control information for scheduling a downlink transmission; or
first downlink control information for scheduling an uplink transmission.

25. The method according to claim 24, wherein the at least one first cell comprises at least one of:
a cell comprised in a cell set corresponding to the first downlink control information for scheduling the downlink transmission;
a cell comprised in a cell set corresponding to the first downlink control information for scheduling the uplink transmission; or
a cell comprised in a cell set corresponding to the first downlink control information for scheduling the uplink transmission and in a cell set corresponding to the first downlink control information for scheduling the uplink transmission.

26. The method according to any one of claims 23 to 25, wherein the reference cell comprises at least one of:
a cell with a smallest cell index among the at least one first cell;
a cell with a largest cell index among the at least one first cell;
a cell with a smallest number of sizes of the pieces of legacy downlink control information configured among the at least one first cell;
a cell for calculating a blind detection resource among the at least one first cell; or
a cell configured with a search space corresponding to the first downlink control information among the at least one first cell.

27. The method according to any one of claims 23 to 26, wherein the pieces of legacy downlink control information in each cell scheduled by the first downlink control information satisfy a preset condition, and the preset condition comprises:
the number of sizes of the pieces of legacy downlink control information scrambled by a cell radio network temporary identifier (C-RNTI) is less than or equal to a first number; and
the number of sizes of the pieces of legacy downlink control information scrambled by an RNTI other than the C-RNTI is less than or equal to a second number.

28. The method according to claim 27, wherein the first number is 3 or 4, and the second number is 1.

29. An apparatus for determining a downlink control information size alignment, comprising:
a receiving module configured to receive first downlink control information for scheduling a plurality of cells; and
a processing module configured to determine a size alignment on pieces of legacy downlink control information in each cell scheduled by the first downlink control information, wherein in at least one first cell corresponding to the first downlink control information, a total number of a size of the first downlink control information and one or more sizes of the pieces of legacy downlink control information aligned is less than or equal to a first threshold.

30. An apparatus for determining downlink control information size alignment, comprising:
a receiving module configured to receive first downlink control information for scheduling a plurality of cells; and
a processing module configured to determine a reference cell among at least one first cell corresponding to the first downlink control information, determine a size alignment on pieces of legacy downlink control information and the first downlink control information in the reference cell, and determine a size alignment on pieces of legacy downlink control information in a second cell among the at least one first cell, wherein the second cell is a cell other than the reference cell among the at least one first cell.

31. An apparatus for performing a downlink control information size alignment, comprising:
a processing module configured to perform a size alignment on pieces of legacy downlink control information in each cell scheduled by first downlink control information for scheduling a plurality of cells, wherein in at least one first cell corresponding to the first downlink control information, a total number of a size of the first downlink control information and one or more sizes of the pieces of legacy downlink control information aligned is less than or equal to a first threshold; and
a transmitting module configured to transmit the first downlink control information to a terminal.

32. An apparatus for performing a downlink control information size alignment, comprising:
a processing module configured to determine a reference cell among at least one first cell corresponding to first downlink control information for scheduling a plurality of cells, perform a size alignment on pieces of legacy downlink control information and the first downlink control information in the reference cell, and perform a size alignment on pieces of legacy downlink control information in a second cell among the at least one first cell, wherein the second cell is a cell other than the reference cell among the at least one first cell; and
a transmitting module configured to transmit the first downlink control information to a terminal.

33. A system for a downlink control information size alignment, comprising: a terminal and a network device, wherein the terminal is configured to implement the method for determining the downlink control information size alignment according to any one of claims 1 to 14, and the network device is configured to implement the method for performing the downlink control information size alignment according to any one of claims 15 to 28.

34. A communication device, comprising:
a processor; and
a memory configured to store a computer program,
wherein the computer program, when executed by the processor, causes the method for determining the downlink control information size alignment according to any one of claims 1 to 14 to be implemented.

35. A communication device, comprising:
a processor; and
a memory configured to store a computer program,
wherein the computer program, when executed by the processor, causes the method for performing the downlink control information size alignment according to any one of claims 15 to 28 to be implemented.

36. A computer-readable storage medium, configured to store a computer program that, when executed by a processor, causes the method for determining the downlink control information size alignment according to any one of claims 1 to 14 to be implemented.

37. A computer-readable storage medium, configured to store a computer program that, when executed by the processor, causes the method for performing the downlink control information size alignment according to any one of claims 15 to 28 to be implemented.
